(19) Europäisches Patentamt
European Patent Office
Office européen des brevets

(11) Publication number: **0 085 522**
**B1**

(12) # EUROPEAN PATENT SPECIFICATION

(45) Date of publication of patent specification: **26.04.89**

(51) Int. Cl.$^4$: **C 22 B 3/00,** C 22 B 15/00

(21) Application number: **83300350.2**

(22) Date of filing: **24.01.83**

(54) **Solvent extraction.**

(30) Priority: **25.01.82 US 340991**

(43) Date of publication of application:
**10.08.83 Bulletin 83/32**

(45) Publication of the grant of the patent:
**26.04.89 Bulletin 89/17**

(84) Designated Contracting States:
**AT BE DE FR GB NL SE**

(56) References cited:
**DE-A-2 264 089**
**DE-A-2 407 200**
**DE-A-2 518 631**
**GB-A-1 537 828**
**US-A-3 428 449**
**US-A-3 592 775**
**US-A-4 029 704**
**US-A-4 142 952**
**US-A-4 173 616**

**Hydrometallurgy (June 1981), vol. 7, pp. 7-26**
**AIME preprint No. 80-93 (February 1980)**

(73) Proprietor: **HENKEL CORPORATION**
**7900 West 78th Street**
**Minneapolis Minnesota 55435 (US)**

(72) Inventor: **Kordosky, Gary Alan**
**5345 W. Camino Del Dieserto**
**Tucson Arizona (US)**
Inventor: **Mackay, Kenneth Donald**
**3040 Holly Lane**
**Plymouth Minnesota (US)**
Inventor: **Sudderth, Robert Brantley**
**6715 Calle Padre Felipe**
**Tucson, Arizona (US)**
Inventor: **Sierakoski, Joseph Michael**
**1957 Placita Tampico**
**Tucson, Arizona (US)**

(74) Representative: **von Kreisler, Alek, Dipl.-Chem. et al**
**Deichmannhaus am Hauptbahnhof**
**D-5000 Köln 1 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 085 522 B1**

## Description

The present invention relates generally to solvent extraction processes for recovery of copper values from aqueous solutions and, more particularly, to improved solvent extraction reagents and their use in recovery of, e.g., copper values.

The starting material for large scale solvent extraction processing of copper is an aqueous leach solution obtained from a body of ore which contains a mixture of metals in addition to copper. The leaching medium dissolves salts of copper and other metals as it trickles through the ore, to provide an aqueous solution of the mixture of metal values. The metal values are usually leached with sulfuric acid medium, providing an acidic aqueous solution, but can also be leached by ammonia to provide a basic aqueous solution.

The aqueous solution is mixed in tanks with an extraction reagent which is dissolved in an organic solvent, e.g., a kerosene. The reagent includes an extractant chemical which selectively forms metal-extractant complex with the ions of the metal to be recovered, e.g. copper ions, in preference to ions of other metals. The step of forming the complex is called the extraction or loading stage of the solvent extraction process.

The outlet of the mixer continuously feeds to a large settling tank, where the organic solvent (organic phase), now containing the metal-extractant, e.g. copper-extractant, complex in solution, is separated from the depleted aqueous solution (aqueous phase). This part of the process is called phase separation. Usually, the process of extraction is repeated through two or more mixer/settler stages, in order to more completely extract the desired metal.

After extraction, the depleted aqueous feedstock (raffinate) is either discharged or recirculated to the ore body for further leaching. The loaded organic phase containing the dissolved metal-extractant, e.g. copper-extractant, complex is fed to another set of mixer tanks, where it is mixed with an aqueous strip solution of concentrated sulfuric acid. The highly acid strip solution breaks apart the metal-extractant complex and permits the purified and concentrated metal to pass to the strip aqueous phase. As in the extraction process described above, the mixture is fed to another settler tank for phase separation. This process of breaking the metal-extractant complex is called the stripping stage, and the stripping operation is repeated through two or more mixer-settler stages to more completely strip the metal, e.g. copper, from the organic phase.

From the stripping settler tank, the regenerated stripped organic phase is recycled to the extraction mixers to begin extraction again, and the strip aqueous phase is customarily fed to an electrowinning tankhouse, where the metal values, e.g. copper values, are deposited on plates by a process of electrodeposition. After the electrowinning of the metal values from the aqueous solution, the solution, known as spent electrolyte, is returned to the stripping mixers to begin stripping again.

Many reagent formulations have been proposed for use in recovery of copper by solvent extraction in the prior art. See, e.g., Flett, D. S., "Solvent Extraction in Hydrometallurgy", *Chemistry and Industry,* No. 17, September 3, 1977, pp. 707—712.

Reagents frequently employed in commercial processes for copper recovery are included among those offered by Henkel Corporation under their LIX® trademark viz., LIX® 63, LIX® 65N, LIX® 64, LIX® 64N, LIX® 70, LIX® 71, LIX® 73, LIX® 34, LIX® 54, LIX® 605, LIX® 617, LIX® 622 and LIX® 6022.

Briefly noted, LIX® 63 includes, in addition to a liquid hydrocarbon diluent, an aliphatic α-hydroxy oxime extractant (5,8-diethyl-7-hydroxy-dodecan-6-oxime) of the type illustrated in Swanson U.S. Patent 3,224,873. LIX® 65N includes an alkyl substituted hydroxy benzophenone oxime (2-hydroxy-5-nonyl benzophenone oxime) as set out in Swanson U.S. Patent No. 3,592,775, while LIX® 64 and 64N incorporate benzophenone oxime extractants (2-hydroxy-5-dodecyl benzophenone oxime and 2-hydroxy-5-nonyl benzophenone oxime, respectively) in combination with an aliphatic α-hydroxy oxime as described in U.S. Patent No. 3,428,449. Formulation of LIX® 70 involves combination of a benzophenone oxime extractant containing an electron withdrawing substituent (2-hydroxy-3-chloro-5-nonyl benzophenone oxime) with an aliphatic α-hydroxy oxime. LIX® 71 and LIX® 73 formulations both include a mixture of two benzophenone oximes, one of which has an electron withdrawing substituent (i.e., a mixture of 2-hydroxy-5-nonyl benzophenone oxime and 2-hydroxy-3-chloro-5-nonyl benzophenone oxime) with the latter reagent further including an aliphatic α-hydroxy oxime.

LIX® 34 and LIX® 54 incorporate alkaryl sulfonamido quinoline and β-diketone extractants, respectively. LIX® 605, LIX® 617, LIX® 622 and LIX® 6022, on the other hand, employ alkyl substituted hydroxy benzaldoxime (salicylaldoxime) extractants according to Parrish, *J. South African Chem. Inst.,* 23, pp. 129—135 (1970). Thus, LIX® 605 and LIX® 617 include 2-hydroxy-5-nonyl benzaldoxime extractants with, respectively, nonylphenol and tridecanol additives. LIX® 622 and LIX® 6022 comprise formulations of 2-hydroxy-5-dodecyl benzaldoxime and a tridecanol additive in approximately 4:1 and 1:1 ratios by weight, respectively. ACORGA PT—5050 is offered for sale by Acorga, Ltd., Hamilton, Bermuda, as a formulation comprising 2-hydroxy-5-nonyl benzaldoxime and a tridecanol additive in an approximately 2:1 ratio by weight. (See also, Ackerley, et al., U.S. Patent 4,020,105; Ackerley, et al., U.S. Patent 4,020,106; and Dalton, U.S. Patent 4,142,952).

Other reagents offered for commercial use in copper recovery by solvent extraction have included extractants of the hydroxy phenyl benzyl ketone oxime type (e.g., 2-hydroxy-5-nonyl phenyl benzyl

ketoxime as illustrated in Anderson, U.S. Patent No. 4,029,704, and offered for sale as P—17 by Acorga, Ltd.) and the hydroxy phenyl alkyl ketone oxime type (e.g., 2-hydroxy-5-nonyl phenyl methyl ketone oxime as described in U.K. Patent 1,322,532 and offered for sale as SME 529 and SME 530 by Shell Chemical Company). SME 529 and SME 530 differ in that the latter contains an α,β-dioxime additive.

Also offered for commercial use in copper recovery are the KELEX® 100 and KELEX® 120 reagents of Ashland Chemical Company, which have included an hydroxy quinoline extractant (7-[3-(5,5,7,7-tetramethyl-1-octenyl)]-8-hydroxyquinoline as described in Buddie, et al., U.S. Patent No. 3,637,711) either with a nonylphenol additive (KELEX® 120 as described in Hartlage, U.S. Patent No. 3,725,046) or without the additive (KELEX® 100).

As may be noted from the above formulations, it is frequently the case that additive chemicals are included in commercial copper extraction reagents. Principal among the additives incorporated in the reagents are (1) kinetic additives and (2) modifiers of extraction and stripping equilibria. The kinetic additives (frequently referred to as "accelerators", "catalysts", "kinetic catalysts" or "kinetic synergists") may be defined as chemical substances included in solvent extraction reagents for the purpose of increasing the rate of transfer of metal values between organic and aqueous phases without materially affecting the position of equilibrium. Kinetic additives function to alter transfer rates in a variety of ways which are as yet far from completely understood. Reagent formulations such as LIX® 64N incorporate a major proportion of benzophenone oxime and a minor proportion of an aliphatic α-hydroxy oxime with the result that the rate of extraction for the reagent under specified conditions may be significantly greater than that of the benzophenone oxime alone.

Modifiers of extraction and stripping equilibria are frequently incorporated in those commercial reagent formulations which include the so-called "strong" extractants. Such extractants are capable of forming a very stable complex association with copper at quite low pH's and, consequently, require the use of very highly acidic aqueous stripping solutions in order to effect the breakdown of the copper-extractant complex. Where extreme acidity of stripping solutions generates problems in employing conventional electrodeposition processes, modifiers are incorporated to shift equilibria in a manner facilitating stripping at lower acidities and to enhance overall metal extraction efficiency. A wide variety of modifier chemicals has been proposed for use in formulation of solvent extraction reagents for copper. These have included: long chain ($C_6$ to $C_{20}$) aliphatic alcohols such as isodecanol, 2-ethylhexanol, and tridecanol; long chain alkyl phenols such as nonylphenol (see, e.g., Hartlage, U.S. Patent 3,725,046); and various organophosphorous compounds such as tributylphosphate (see, e.g., Ritcey, et al., *Transactions of the International Solvent Extraction Conference,* 1974, pp. 2437—2481). Equilibrium modifiers most frequently employed in commercial reagents include nonylphenol (e.g., LIX® 120, LIX® 605) and tridecanol (e.g., LIX® 617, LIX® 622, LIX® 6022, PT—5050).

The use of kinetic additives and equilibrium modifiers has not been without drawbacks in the overall efficiency of solvent extraction processes in terms of the long range stability of reagents and the sensitivity of reagents to contaminants in aqueous feedstocks. As an example, while the minor proportion of kinetic additive present with the hydroxy aryl ketoxime extractant in the LIX® 64N reagent formulation provides for kinetic enhancement in the use of the ketoxime, the additive is less stable toward hydrolytic degradation than the ketoxime. When used under operating conditions which are optimal for ketoxime extractant efficiency the aliphatic α-hydroxy oxime thus tends to be depleted from continuous systems more rapidly than the ketoxime. Similarly, hydroxy aryl aldoxime extractants are less stable in use than ketoximes and are rendered even more unstable by the presence of large quantities of nonylphenol or other alcoholic modifiers. Alkyl phenol equilibrium modifiers, when entrained in aqueous phases have been noted to have severe deleterious effects on structural components of solvent extraction facilities, such as rubber linings, fittings, valves and the like. Finally, leach solutions containing dissolved silica frequently tend to form emulsions with active metal extractants and their diluents and the sensitivity of reagents to silica has been noted to be enhanced by the presence of equilibrium modifiers. On the whole, therefore, reagents which include minimal quantities of kinetic additives and/or equilibrium modifiers (or none of these additives at all) are among the most preferred and sought-after for commercial use in recovery of copper.

Of interest to the background of the present invention are those prior patents and publications which disclose reagent formulations which are kinetic additive and/or equilibrium modifier free.

Ashbrook, et al., U.S. Patent No. 3,455,680 states that superior copper extraction results are obtained through use of assertedly synergistic combinations of aliphatic α-hydroxy oxime extractants and organophosphoric acid extractants. More particularly, the mixture of the two "weak" extractants, which ordinarily form stable copper-extractant complexes at relatively high acid pH's, is said to provide for more efficient extraction at lower pH levels than can be obtained with either extractant alone with the apparent elimination of the need for equilibrium modification. German Offenlegungsschrift 2,407,200, states that mixtures of two or more hydroxyphenyl alkyl ketoximes (of the type disclosed in the previously-noted U.K. Patent No. 1,322,532) are distinguished by greatly improved extraction kinetics over the individual components and the apparent elimination of the need for use of kinetic additives. U.K. 1,537,828 asserts that synergistic kinetic effects attend incorporation of hydrocarbyl hydroxymethyl ketone oximes in reagent formulations including 2-hydroxy phenyl alkyl ketone oximes and/or 2-hydroxy phenyl aldoximes and/or 2-hydroxy benzophenone oximes.

By and large, the literature has been less encouraging in its proposals for any enhanced effects

resulting from the admixture of extractants with consequent decrease in relative content or elimination of kinetic additives or equilibrium modifiers.

In published evaluations of the LIX® 71 and LIX® 73 reagents (which, as noted above, comprise equimolar mixtures of a "strong", chlorine-substituted hydroxy benzophenone oxime with a relatively "weaker" benzophenone oxime not having an electron-withdrawing substituent), no kinetic or equilibrium shifting efficiencies in solvent extraction processing were noted. Properties of the mixed-extractant reagent were noted to be simply intermediate those of the individual components. See, Agers, et al., TMS Paper No. A72—87, The Metallurgical Society of AIME, New York, New York (1972). In discussion of combinations of β-diketone extractants for copper and other metals, Marcus, et al., noted that most combinations provide no marked synergistic effects and maintained that this is in keeping with a prior hypothesis of synergistic effects only in the combination of one strong and one weak β-diketone extractant. [See, "Ion Exchange and Solvent Extraction of Metal Complexes", pp. 853—854, Wiley-Interscience, London (1969)]. The hypothesis is apparently inconsistent with the synergistic results assertedly obtained by admixture of equal strength hydroxy phenyl alkyl ketoximes in German Offenlegungsschrift 2,407,200 (kinetic enhancement) or admixture of two weak extractants in Ashbrook, et al., U.S. Patent 3,455,680 (equilibrium shifting).

An evaluation of mixtures of LIX® 34 (containing a quinoline extractant and no kinetic additive or equilibrium modifier) with LIX® 64N (containing an hydroxy aryl ketoxime with an aliphatic α-hydroxy oxime kinetic additive) was provided by Kordosky in CIM Special Volume 21, pp, 486—495 (1979) and the mixture of extractants was noted weaker in extractive power than either of the components individually. In *Dissertation Abstracts International,* Vol. 41, No. 11, p. 4233, May 1981, Valdes reports that mixtures of LIX® 64N and SME 529 (containing an hydroxy phenyl alkyl ketoxime and no kinetic additive) were completely compatible but that no synergistic effects were noted.

Finally, Tumilty, et al., [*Adv. in Extractive Metallurgy Int'l. Symp.* 3rd, pp. 123—131, 1977 (London)] reported the properties of a reagent series comprising an alkyl substituted hydroxy benzaldoxime extractant and varying quantities of an nonylphenol equilibrium modifier. The report cites experimental studies relating to a proposed plant changeover from a "present generation [LIX® 64N] oxime" to a benzaldoxime reagent having a 3:1 nonylphenol/oxime weight ratio (ACORGA P—5300). The studies indicated that over the course of the gradual replacement of LIX® 64N with the "strong" extractant-containing P—5300, there was a gradual and essentially linear progression in stripped solvent copper level and stage efficiencies from the levels and efficiencies of the original reagent until 100 percent replacement with the substitute was attained. These results substantially mirrored those reported in Ritcey, et al., *CIM Bulletin,* February, 1974, pp. 87—92, wherein mixtures of a "strong", 8-hydroxyquinoline extractant (KELEX® 100) and LIX® 64N were noted to be compatible, but not to display either synergism or antagonism.

US-Patent 4 173 616 discloses the use of α,β-dioximes such as a mixture of 1-(4'-alkylphenyl)-1,2-propanedione dioximes in combination with mixed ketoximes and aldoximes. The US-Patent is silent on extraction and stripping equilibrium modifier substances and merely comprises α,β-dioximes and the use of these oximes without further additives.

Whewell et al (Degradation in Hydroxime Solvent Extraction Systems, Hydrometallurgy (June 1981), Vol. 7, pages 7 to 26) and Hanson (AIME Preprint No. 80 to 93 (Feb. 24 to 28, 1980)), generally deal with oxime extractant losses through degradation. Both references do not provide any hint whatever one ought to purposely employ mixtures of hydroxy aryl ketoxime- and hydroxy aryl aldoxime extractants for recovery of copper or that any benefits might attend to such use in terms of diminution or elimination of the need for kinetic additives of equilibrium modifiers. The only aldoxime-containing reagent referred to is P—5100 and it includes, as formulated, a high amount of added nonylphenol equilibrium modifier.

There continues to exist, therefore, a general need in the art for reagents for solvent extraction processes for the recovery of metal values such as copper values which display efficient kinetic and equilibrium characteristics but which include diminished quantities of kinetic additives and/or equilibrium modifiers.

One object of the present invention is therefore to provide a composition useful for extracting copper from an aqueous solution and containing a reagent composition comprising:

(a) one or more hydroxy aryl ketoxime compounds of Formula I

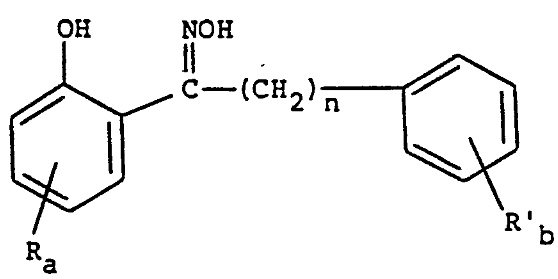

(I)

(in which R and R', which may be the same or different, each represents a saturated aliphatic group having

1—25 carbon atoms, an ethylenically unsaturated aliphatic group having 3—25 carbon atoms or a group of formula —OR″ where R″ represents a saturated aliphatic group having 1—25 carbon atoms or an ethylenically unsaturated aliphatic group having 3—25 carbon atoms; *n* is 0 or 1; and each of *a* and *b*, which may be the same or different, is 0, 1, 2, 3 or 4, the sum of a and b being at least 1; with the proviso that the total number of carbon atoms in $R_a$ and $R'_b$ is from 3 to 25) or Formula II

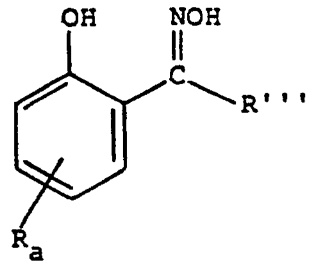

(II)

(in which R represents a saturated aliphatic group having 1—25 carbon atoms, an ethylenically unsaturated aliphatic group having 3—25 carbon atoms or a group of formula —OR″ where R″ represents a saturated aliphatic group having 1—25 carbon atoms or an ethylenically unsaturated aliphatic group having 3—25 carbon atoms; *a* is 0, 1, 2, 3 or 4; and R‴ represents a saturated aliphatic group having 1—25 carbon atoms or an ethylenically unsaturated aliphatic group having 3—25 carbon atoms; with the proviso that the total number of carbon atoms in $R_a$ and R‴ is from 3 to 25);

(b) one or more hydroxy aryl aldoxime compounds of Formula III

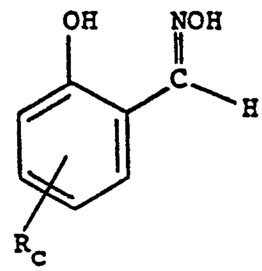

(III)

(in which R represents a saturated aliphatic group having 1—25 carbon atoms, an ethylenically unsaturated aliphatic group having 3—25 carbon atoms or a group of formula —OR″ where R″ represents a saturated aliphatic group having 1—25 carbon atoms or an ethylenically unsaturated aliphatic group having 3—25 carbon atoms; C is 1, 2, 3 or 4; and the total number of carbon atoms in $R_c$ is from 3 to 25);

(c) a kinetic additive substance in an amount of from 0 to 20 mole percent based on the hydroxy aryl ketoxime present; and,

(d) an extraction and stripping equilibrium modifier substance in an amount providing for a degree of modification of the hydroxy aryl aldoxime present of from about 0.66 to about 1.0; where the said modifier is other than nonylphenol and from about 0.898 to 1.0 where the said modifier is nonylphenol;

(e) the mole ratio of the hydroxy aryl ketoxime present to the hydroxy aryl aldoxime present being from 1:100 to 100:1, whereby said degree of modification designates the inverse ratio of

(i) the stripped solvent copper level of the hydroxy aryl aldoxime at equilibrium with an aqueous strip solution being 150 g/l sulfuric acid and 30 g/l $Cu^{2+}$ to

(ii) the stripped solvent copper level of the said aldoxime under the same conditions when the equilibrium modifier additive is present, and

whereby for the determination of the degree of modification, the temperature is of about 24°C, the molar concentration of aldoxime or mixture of aldoximes in the diluent is about 0.184 as determined by copper value loading and titration, an aldoxime stock of approximately 94 percent purity, the remainder being substantially alkyl phenol starting material residue employed, the diluent for the hydroxy aryl aldoxime is Escaid® 100 or a mixture of aliphatic and aromatic hydrocarbons closely approximating the constitution of Escaid® 100, an atomic absorption methodology being employed for determining copper value content.

Efficient copper value recovery is achieved by the use of the reagent compositions of the invention despite diminished use of kinetic additive and/or equilibrium modifier content and even under circumstances wherein these additives are completely eliminated.

According to a further aspect of the present invention we provide the use for the recovery of metal values from aqueous solutions of reagents containing at least one hydroxy aryl ketoxime of Formula I and/or II (as hereinbefore defined) and at least one hydroxy aryl aldoxime of Formula III (as hereinbefore defined).

Preferred compounds of Formula I are those wherein *a* is 1, b is 0, R is a straight or branched chain alkyl

group having from 7 to 12 carbon atoms, and wherein R is attached in a position *para* to the hydroxyl group. Among these, the more preferred are those wherein R is a mixture of isomers. Preferred compounds of Formula II are those wherein R''' is methyl and R and *a* are as designated as being preferred for compounds of Formula I. Compounds of Formulae I and II which are especially useful in practice of the invention include: 2-hydroxy-5-nonyl benzophenone oxime; 2-hydroxy-5-dodecyl benzophenone oxime; 2-hydroxy-5-nonyl phenyl benzyl ketone oxime; and 2-hydroxy-5-nonyl phenyl methyl ketone oxime.

Preferred hydroxy aryl aldoxime extractants of Formula III useful in formulation of reagents of the invention are those wherein *c* is 1, R is a straight or branched chain alkyl group having from 7 to 12 carbon atoms, and wherein R is attached in a position *para* to the hydroxyl group. Among these, the more preferred are those wherein R is a mixture of isomers. Compounds of Formula III which are especially useful in practice of the invention include 2-hydroxy-5-heptyl benzaldoxime, 2-hydroxy-5-octyl benzaldoxime, 2-hydroxy-5-nonyl benzaldoxime and 2-hydroxy-5-dodecyl benzaldoxime.

Reagents of the invention comprise mixtures of one or more ketoximes of Formulae I and II with one or more aldoximes of Formula III in molar ratios ranging from 1:100 to 100:1 and preferably from 1:4 to 4:1 with particularly good results being obtained at ratios of 1:1. Kinetic additive substances may be present in amounts ranging from 0 to 20 mole percent based on ketoxime content and preferably about 5 mole percent. Preferred kinetic additives include α-hydroxy oximes described in Swanson, U.S. Patent 3,224,873 and α,β-dioximes described in Koenders, et al., U.S. Patent 4,173,616. Equilibrium modifiers may be present in amounts providing a degree of modification of the aldoxime component of from about 0.66 to 1.0 and preferably from about 0.75 to 0.99. Preferred equilibrium modifier chemicals include aliphatic alcohols such as tridecanol, alkyl phenols such as nonyl-phenol and organophosphorus compounds such as tributyl phosphate. Reagent formulations may optionally include a diluent substance.

The reagents as above-described may be used in the recovery of metal values, especially copper values, from aqueous solutions by solvent extraction processing.

According to a yet further aspect of the present invention there is provided a process for the recovery of copper values from an aqueous solution comprising:

1. contacting the aqueous solution with an organic phase comprising a water-immiscible solvent and a reagent composition according to the invention as hereinbefore defined to extract at least a portion of the copper values into the organic phase;
2. separating the resultant copper value pregnant organic phase from the aqueous phase; and
3. recovering copper values from the metal value pregnant organic phase.

Compounds of Formula I wherein *n* has a value of 0 (i.e., hydroxy benzophenone oxime compounds) may suitably be prepared according to the methods disclosed in Swanson U.S. Patent Nos. 3,952,775 and 3,428,449. By reason of ease and economy of synthesis from available starting materials, ready solubility in organic diluents commonly employed in solvent extraction and desirable properties of complexes of the compounds with copper, preferred benzophenone oxime compounds of Formula I include those having a single alkyl ring substituent having from 7 to 12 carbon atoms in a position *para* to the hydroxyl group, which alkyl substituent is a mixture of isomers. Examples of such compounds are 2-hydroxy-5-nonyl benzophenone oxime and 2-hydroxy-5-dodecyl benzophenone oxime which are obtained as mixtures of alkyl isomeric forms when commercial nonylphenol and dodecyl phenol are respectively employed in their synthesis.

Compounds of Formula I wherein *n* has a value of 1 (i.e., hydroxy phenyl benzyl ketone oxime compounds) may suitably be prepared according to the methods described in Anderson, U.S. Patent No. 4,029,704. Preferred phenyl benzyl ketone oximes, like the above-noted benzophenone oximes, are those having an isomeric mixture of 7 to 12 carbon alkyl groups as a single substituent on the ring *para* to the hydroxyl group. These preferred compounds are exemplified by the compound, 2-hydroxy-5-nonylphenyl benzyl ketone oxime, as manufactured from a commercial nonylphenol comprising a mixture of nonyl isomeric forms.

Compounds of Formula II (i.e., hydroxy phenyl alkyl ketone oxime compounds) may suitably be prepared according to the procedures disclosed in U.K. Patent No. 1,322,532. As noted with regard to benzophenone oxime and phenyl benzyl ketone oxime compounds of Formula I, preferred phenyl alkyl ketone oxime compounds of Formula II are those having an isomeric mixture of 7 to 12 carbon alkyl groups as a single substituent on the ring *para* to the hydroxyl group. Also preferred are compounds wherein the R''' alkyl group is methyl. Consequently, illustrative of preferred phenyl alkyl ketone oxime compounds is 2-hydroxy-5-nonyl phenyl methyl ketone oxime manufactured through use of commercial nonylphenol.

Compounds of Formula III (i.e., hydroxy benzaldoxime compounds, sometimes referred to as "salicylaldoximes") may suitably be prepared according to the methods described in Ackerley, et al., U.S. Patent No. 4,020,105 or Ackerley, et al., U.S. Patent No. 4,020,106 or by oximation of aldehydes prepared according to Beswick, U.S. Patent No. 4,085,146. Again, preferred compounds are those having an isomeric mixture of isomeric 7 to 12 carbon alkyl groups as a single substituent *para* to the hydroxyl group. Mixed alkyl isomeric forms of 2-hydroxy-5-heptyl benzaldoxime, 2-hydroxy-5-octyl benzaldoxine, 2-hydroxy-5-nonyl benzaldoxime and 2-hydroxy-5-dodecyl benzaldoxime are thus preferred.

Preparation of the reagents according to the invention involves preparing an admixture of one or more hydroxy aryl ketoxime compounds of Formula I and/or II with one or more hydroxy aryl aldoxime compounds of Formula III in molar ratios of ketoxime to aldoxime ranging from 1:100 to 100:1 and

preferably from about 1:4 to about 4:1 with particularly good results being obtained at ratios of 1:1.

Reagents of the invention may optionally include an aliphatic, or aromatic, or mixed aliphatic/aromatic liquid hydrocarbon diluent of the kerosene type commonly employed in solvent extraction processing. Incorporation of a diluent frequently aids the transport and handling of the extractants which may be highly viscous.

In one aspect of the invention, effective reagents for solvent extraction of copper may be prepared which include hydroxy aryl ketoxime extractants but which either do not include kinetic additive substances of the type commonly employed to enhance kinetic characteristics of such extractants or which include less of such kinetic additives than is ordinarily employed. While reagents of the invention can include as much kinetic additive as is ordinarily employed in combination with an hydroxy aryl ketoxime extractant in commercial copper extraction processes, i.e., up to about 20 mole percent based on ketoxime content, the incorporation of an hydroxy aryl aldoxime extractant in the reagent results in there being a lesser kinetic additive to total active hydroxy aryl oxime ratio than ordinarily present for effective recovery from a given copper-containing aqueous solution. This, in turn, is expected to provide for diminished formulation costs and a lessened disparity in overall rates of hydrolytic degradation among reagent constituents.

Accordingly, kinetic additives may be incorporated in reagent formulations of the invention in amounts ranging from 0 to 20 mole percent based on hydroxy aryl ketoxime content and preferably from about 0.01 to 5 mole percent, i.e. if present at all, as little as 0.01 mole percent of the kinetic additive may be used. Suitable kinetic additive substances include aliphatic α-hydroxy oximes prepared according to Swanson, U.S. Patent 3,224,873 or U.K. 1,537,828 and α,β-dioximes according to Koenders, et al., U.S. Patent 4,173,616. A preferred α-hydroxy oxime kinetic additive is 5,8-diethyl-7-hydroxydodecan-6-oxime and a preferred dioxime kinetic additive is a mixture of 1-(4′-alkylphenyl)-1,2-propanedione dioximes according to Example 3 of U.S. Patent No. 4,173,616.

In another aspect of the invention, effective reagents for solvent extraction of copper may be prepared which include hydroxy aryl aldoxime extractants but which either do not include equilibrium modifier substances of the type commonly employed to alter aldoxime extraction and stripping equilibria or which include less of such modifiers than ordinarily employed. While reagents of the invention may include as much equilibrium modifier as has been employed in combination with an hydroxy aryl aldoxime extractant in commercial copper extraction processes, the incorporation of an hydroxy aryl ketoxime extractant in the reagent will result in there being a lesser equilibrium modifier to total active hydroxy aryl oxime ratio than ordinarily present for the effective recovery of copper from a given copper-containing aqueous solution. This is expected to result in diminished acceleration of aldoxime degradation as brought about by reagent modifier chemicals as well as diminished susceptibility to the adverse effects of aqueous feedstock solution contaminants such as dissolved silicates.

Accordingly, equilibrium modifier substances may be incorporated in reagent formulations of the invention in amounts providing a degree of modification of the hydroxyl aryl aldoxime constituent, in the absence of any hydroxy aryl ketoxime, of from about 0.66 to 1.0 and preferably from 0.75 to 0.99. Equilibrium modifiers suitable for use in the present invention include: long chain (preferably $C_6$—$C_{20}$) aliphatic alcohols such as n-hexanol, n-octanol, 2-ethylhexanol, isodecanol, dodecanol, tridecanol, hexadecanol, and octadecanol; long chain alkylphenols such as heptylphenol, octylphenol, nonylphenol and dodecylphenol; and organophosphorus compounds such as triloweralkyl ($C_4$ to $C_8$) phosphates, especially, tributyl phosphate and tri(2-ethylhexyl)phosphate.

As employed herein, "degree of modification" designates the inverse ratio of (a) the stripped solvent copper value, level of an hydroxy aryl aldoxime extractant at equilibrium (expressed in terms of grams per liter of copper value extracted) with an aqueous solution containing a fixed concentration of the copper value and sulfuric acid to (b) the stripped solvent copper value level of the same extractant under the same conditions when a selected equilibrium modifier additive is present. Consistent with this definition, the presence of relatively small quantities of an equilibrium modifier will shift the extraction equilibrium slightly, resulting in minor diminution of aldoxime stripped solvent copper value level at equilibrium, as will be reflected by a degree of modification value closely approaching 1.0, e.g., 0.99. Increased effective quantities of modifier under otherwise identical conditions will result in a more pronounced shift in extraction equilibrium and a more pronounced diminution of aldoxime stripper solvent copper value level at equilibrium, as will be reflected by a degree of modification corresponding less than 1.0.

Expectedly, the degree of modification resulting from a given molar ratio of equilibrium modifier to aldoxime in a reagent will vary depending on such factors as the degree of purity of the extractant composition employed in formulation of the reagent, the aromaticity of the solvent, and, perhaps most significantly, the chemical identity of the equilibrium modifier employed. It will also depend significantly on the conditions involved in determination of stripped solvent copper value levels. Consequently, for purposes of determining degree of modification of an aldoxime by a given equilibrium modifier, the following test conditions should be adhered to. The temperature at which the determination for the degree of modification is made is about 24°C. The molar concentration of aldoxime (or mixture of aldoximes) in the diluent should be about 0.184 as determined by copper value loading and titration, an aldoxime stock of approximately 94 percent purity, with the remainder being substantially alkyl phenol starting material residue is employed, the diluent is Escaid® 100 or a mixture of aliphatic and aromatic hydrocarbons closely

approximating the constitution of Escaid® 100. An atomic absorption methodology is employed for determining copper value content. The composition of the strip solution is 150 g/l sulfuric acid and 30 g/l $Cu^{+2}$. The foregoing conditions are employed in determining degree of modification according to the invention because they represent conditions closely resembling those commonly existant in commercial solvent extraction facilities for recovery of copper.

Tables I, II and III below provide an illustrative showing of the degree of modification provided by differing mole ratios of three representative equilibrium modifiers vis-à-vis a representative hydroxy aryl aldoxime. More specifically, the Tables provide the results of copper loading determinations of solutions of 2-hydroxy-5-nonyl benzaldoxime extractant alone and with varying quantities of nonylphenol, tridecanol and tributyl phosphate modifier.

Each determination involved use of a reagent solution comprising 2-hydroxy-5-nonyl benzaldoxime dissolved in a kerosene diluent. The stock benzaldoxime employed was preliminarily determined to be 94% pure (by titration) with the remaining stock components principally comprising a nonylphenol residue from synthesis. The diluent employed was prepared by admixture of 20 volume percent of the highly aromatic kerosene solvent Exxon Aromatic 150 with 80 volume percent of the highly aliphatic kerosene solvent Escaid® 200 and thus closely resembled the constitution of the mixed aromatic/aliphatic kerosene solvent, Escaid® 100. Solutions were prepared to be 0.184 molar in active aldoxime (corresponding to a concentration of about 48.4 g/l).

A control solution was equilibrated by multiple agitated contacts (at 24°C) with a strip solution containing 150 g/l sulfuric acid and 30 g/l $Cu^{+2}$ (organic/aqueous volume ratio, "O/A" = 1/1). Three separate 3 minute contacts with fresh strip solution were performed and the copper content of the resulting organic solution was determined. Solutions were then prepared including varying quantities of modifier and an identical quantity of aldoxime and tested for stripped solvent copper content under the same conditions.

TABLE I

| Aldoxime Content grams/liter (Molarity) | Nonylphenol Added grams/liter (Molarity) | Copper Loading Grams/liter | Degree of Modification |
|---|---|---|---|
| 48.4 (0.184) | 0 | 3.16 | 1.000 |
| 48.4 (0.184) | 25 (0.114) | 2.84 | 0.898 |
| 48.4 (0.184) | 50 (0.227) | 2.56 | 0.810 |
| 48.4 (0.184) | 100 (0.454) | 2.10 | 0.664 |
| 48.4 (0.184) | 150 (0.682) | 1.76 | 0.556 |
| 48.4 (0.184) | 200 (0.909) | 1.53 | 0.484 |
| 48.4 (0.184) | 300 (1.364) | 1.15 | 0.364 |
| 48.4 (0.184) | 400 (1.818) | 0.91 | 0.288 |

The data set out above illustrate that a degree of modification greater than 0.66 for the aldoxime tested is provided by formulation with nonylphenol at a molar ratio to the oxime of about 2:1. Correspondingly greater or lesser of nonylphenol/oxime will provide correspondingly lower or higher degrees of modification. It should be noted that the actual quantity of nonylphenol present in each solution tested is somewhat greater (by about 2.9 g/l) than reflected by the quantity added owing to the above-noted residual nonylphenol in the aldoxime stocks employed to make the solutions.

Table II presents the results of procedures addition of a tridecanol modifier to 2-hydroxy-5-nonyl benzaldoxime.

TABLE II

| Aldoxime Content grams/liter (Molarity) | Tridecanol Added grams/liter (Molarity) | Copper Loading Grams/liter | Degree of Modification |
|---|---|---|---|
| 48.4 (0.184) | 0 | 3.16 | 1.000 |
| 48.4 (0.184) | 25 (0.125) | 2.33 | 0.739 |
| 4.84 (0.184) | 50 (0.250) | 1.75 | 0.554 |
| 4.84 (0.184) | 100 (0.500) | 1.05 | 0.332 |

The data set out above illustrate that a degree of modification of greater than 0.66 for the aldoxime tested will be provided by about 1:1 molar ratio of tridecanol to aldoxime. It should again be noted that the total equilibrium modifier present in the above solutions consisted of about 2.9 g/l nonylphenol and the indicated added tridecanol.

Table III presents the results of procedures involving addition of a tributyl phosphate modifier to 2-hydroxy-5-nonyl benzaldoxime.

TABLE III

| Aldoxime Content grams/liter (Molarity) | Tributyl phosphate Added grams/liter (Molarity) | Copper Loading Grams/liter | Degree of Modification |
|---|---|---|---|
| 48.4 (0.184) | 0 | 3.16 | 1.000 |
| 48.4 (0.184) | 25 (0.094) | 1.94 | 0.614 |
| 48.4 (0.184) | 50 (0.187) | 1.00 | 0.316 |
| 48.4 (0.184) | 80 (0.300) | 0.34 | 0.107 |

The data set out above illustrate that a degree of modification of greater than 0.60 for the aldoxime tested will be provided by about a 1:2 molar ratio of tributyl phosphate to aldoxime. Again, the modifier content of the test solutions should be noted as comprising a mixture of about 2.9 g/l nonylphenol and the indicated added quantities of tributyl phosphate.

In the event that an aldoxime employed in formulation of reagents of the invention is insufficiently soluble in Escaid 100 diluent to allow preparation of a 0.184 molar solution, a more highly aromatic diluent can be employed to determine the degree of modification. It may be the case that an empirically determined translation factor may appropriately be applied to values determined to obtain degree of modification values corrected for diluent effects, but this had not been the case in the procedures performed to date. When, for example, procedures resulting in the data in Table I were repeated using Exxon Aromatic 150 as the sole diluent, grams/liter copper loading values were depressed (2.19 g/l as versus 3.16 g/l for the system having no added nonyl phenol) but the degree of modification values were substantially the same for nonylphenol additions of 25, 50, and 100 grams/liter.

In view of the above, reagents comprehended by the present invention are seen to comprise mixtures of one or more hydroxyl aryl ketoxime extractants of Formulae I and/or II with one or more hydroxy aryl aldoxime extractants of Formula III, with ketoxime to aldoxime molar ratios of from 1:100 to 100:1. The reagents further comprise from 0 to 20 mole percent of a kinetic additive based on ketoxime content. The reagents also comprise a modifier of extraction and stripping in an amount providing a degree of modification of the aldoxime constituent of from about 0.66 to 1.0. Among the reagents comprehended by the present invention, therefore, are reagents which consist of a mixture of specified aldoxime and ketoxime extractants and which include neither a kinetic additive (i.e., 0 mole percent kinetic additive based on ketoxime content) nor an added equilibrium modifier (i.e., a modifier content providing a degree of modification of 1.0).

Comprehended by the present invention are processes for recovery of copper from an aqueous solution comprising: contacting the aqueous solution with an organic phase comprising a water immiscible organic solvent (such as liquid hydrocarbon) and a reagent as specified above to extract at least a portion of the copper values into the organic phase; separating the resultant copper-pregnant organic phase from the resultant copper-barren aqueous phase; and recovering copper values from the copper-pregnant organic phase. Processes of the present invention most advantageously further involve use of a kerosene solvent and stripping of copper values from the copper-pregnant organic phase by means of an acid. Aqueous solutions from which copper values may be recovered by processes are preferably acidic, having a pH of from about 0.5 to 7.0, but may also be basic.

The following examples are provided for the purpose of illustrating reagents and processes of the invention. More particularly, the examples relate to reagent formulations individually including three different hydroxy aryl aldoximes of Formula III (5-octyl-, 5-nonyl-, and 5-dodecyl salicylaldoxime) and three different hydroxy aryl ketoximes of Formulae I and II (2-hydroxy-5-nonyl benzophenone oxime, 2-hydroxy-5-nonyl phenyl benzyl ketone oxime and 2-hydroxy-5-nonyl phenyl methyl ketone oxime). In some examples, representative kinetic additives (5,8-diethyl-7-hydroxy-4-dodecan-6-oxime according to U.S. Patent No. 3,224,873 and an α,β-dioxime according to U.S. Patent No. 4,173,616) are present and in some examples they are not included in the reagent. In some examples, representative equilibrium modifiers (tridecanol, dodecylphenol) are present while in other examples no equilibrium modifier is present beyond small quantities of phenolic starting materials remaining as a residue in aldoxime stocks. Certain examples provide experimental data indicating highly advantageous net copper transfer properties for the reagents and certain others indicate advantageous kinetic properties.

In each illustrative example of the present invention, experimental data establish significant departures in properties of reagents from the properties which would be predicted for the reagents based upon characteristics of the component hydroxy aryl ketoxime and hydroxy aryl aldoxime extractants. To further illustrate the present invention, comparative examples relating to reagent formulations outside the scope of the invention are provided.

## Example 1

This example relates to the properties of two extractant solutions (and reagents comprising mixtures of the solutions) wherein the active extractant chemical of one solution is a ketoxime of Formula I and the active extractant of the other is an aldoxime of Formula III. The reagent solutions tested were: (1) a 32 v/v percent solution of LIX® 64N (0.36 molar in 2-hydroxy-5-nonyl benzophenone oxime and 0.0225 molar in 5-8-diethyl-7-hydroxydodecan-6-oxime) in Escaid® 100; and (2) a 20 v/v percent solution of 2-hydroxy-5-nonyl benzaldoxime (0.32 molar and prepared using a 94% pure stock oxime) in Escaid® 100. The respective solutions and mixtures thereof in volume/volume ratios of 90/10, 80/20, 70/30, 60/40, 50/50, 40/60, 30/70, 20/80 and 10/90 were equilibrated with a solution containing 180 g/l sulfuric acid and 30 g/l $Cu^{+2}$ by three separate, three minute agitated contacts with fresh solution employed for each contact. The respective equilibrated stripped organics were then filtered and a portion of each sampled for analysis before the remainder was equilibrated with an aqueous copper sulfate solution containing 5.4 g/l $Cu^{+2}$, 1 g/l ferric ion at a pH of 1.90 using a vigorous 3 minute contact at O/A=1/1. The respective organic and aqueous phases were then analyzed. The results are shown in Table IV below and indicate significant departures in copper extraction properties for the mixed reagents from those properties predicted on the results obtained for the unmixed extractant solutions.

TABLE IV

| Solution Ratio #1/#2 | Stripped Organic Actual (Predicted) | Loading O/A = 1/1 Organic Actual/ (Predicted) | Aqueous Actual/ (Predicted) |
|---|---|---|---|
| 100/0 | 0.20 | 4.38 | 1.39 |
| 90/10 | 0.47 (0.74) | 4.63 (4.97) | 1.17 (1.34) |
| 80/20 | 0.65 (1.28) | 4.99 (5.56) | 1.07 (1.28) |
| 70/30 | 1.07 (1.81) | 5.64 (6.16) | 0.91 (1.22) |
| 60/40 | 1.37 (2.35) | 5.91 (6.75) | 0.82 (1.17) |
| 50/50 | 1.94 (2.89) | 6.75 (7.34) | 0.75 (1.12) |
| 40/60 | 2.35 (3.43) | 6.93 (7.93) | 0.69 (1.06) |
| 30/70 | 2.95 (3.97) | 7.59 (8.52) | 0.65 (1.00) |
| 20/80 | 3.64 (4.50) | 8.33 (9.12) | 0.67 (0.95) |
| 10/90 | 4.42 (5.04) | 9.09 (9.77) | 0.71 (0.90) |
| 0/100 | 5.58 | 10.30 | 0.84 |

Example 2

This Example relates to properties of two extractant solutions (and reagent mixtures of these solutions) wherein the active extractant in one is a ketoxime of Formula I and the active extractant of the other is an aldoxime of Formula III. The solutions tested were: (1) a 19.2 v/v percent solution of SME 530 (0.36 molar in 2-hydroxy-5-nonyl phenyl methyl ketone oxime and approximately 0.02 molar in an α,β-dioxime of the type illustrated in Example 3 of U.S. 4,173,616); and (2) a 2-hydroxy-5-nonyl benzaldoxime solution as in Example 1. Solutions were tested individually and as mixtures under the conditions and according to the procedures of Example 1. Experimental data set out in Table V below indicate significant departures in properties of mixed solution reagents as compared to those predicted on the basis of properties of unmixed solutions.

TABLE V

| Solution Ratio #1/#2 | Stripped Organic Actual (Predicted) | Loading O/A = 1/1 Organic Actual/ (Predicted) | Aqueous Actual/ (Predicted) |
|---|---|---|---|
| 100/0 | 0.25 | 4.66 | 1.13 |
| 90/10 | 0.44 (0.75) | 4.89 (5.20) | 1.03 (1.09) |
| 80/20 | 0.71 (1.25) | 5.28 (5.75) | 0.91 (1.05) |
| 70/30 | 1.04 (1.76) | 5.79 (6.30) | 0.78 (1.01) |
| 60/40 | 1.44 (2.27) | 6.24 (6.84) | 0.71 (0.97) |
| 50/50 | 1.94 (2.78) | 6.81 (7.38) | 0.65 (0.94) |
| 40/60 | 2.33 (3.30) | 7.34 (7.93) | 0.60 (0.90) |
| 30/70 | 2.91 (3.80) | 7.92 (8.48) | 0.56 (0.86) |
| 20/80 | 3.66 (4.31) | 8.58 (9.02) | 0.57 (0.82) |
| 10/40 | 4.40 (4.82) | 9.34 (9.56) | 0.62 (0.78) |
| 0/100 | 5.33 | 10.11 | 0.74 |

Example 3

Example 1 was repeated using an hydroxy phenyl benzyl ketone oxime of Formula I (an 18 v/v percent solution Acorga P—17 reagent which contains about 60 weight/weight percent 2-hydroxy-5-nonyl phenyl benzyl ketone oxime in Kermac 627) in place of the indicated benzophenone oxime. Stripped organic data are set out in Table VI below.

TABLE 6

| Solution Ratio #1/#2 | Stripped Organic Actual (Predicted) |
|---|---|
| 100/0 | 0.12 |
| 50/50 | 1.71 (2.60) |
| 0/100 | 5.09 |

Example 4

Example 1 was repeated but using a different hydroxy aryl aldoxime of Formula III in place of the aldoxime indicated. The aldoxime solution employed (#2) was a 20 v/v percent solution of 2-hydroxy-5-dodecyl benzaldoxime (0.32 molar) and 0.063 molar in dodecylphenol in Escaid 100. Experimental data obtained are set out in Table VII below.

TABLE VII

| Solution Ratio #1/#2 | Stripped Organic Actual (Predicted) | Loading O/A = 1/1 Organic Actual/ (Predicted) | Aqueous Actual/ (Predicted) |
|---|---|---|---|
| 100/0 | 0.31 | 4.62 | 1.67 |
| 90/10 | 0.49 (0.73) | 5.20 (5.07) | 1.43 (1.59) |
| 80/20 | 0.74 (1.14) | 5.47 (5.52) | 1.28 (1.52) |
| 70/30 | 1.08 (1.56) | 5.84 (5.98) | 1.19 (1.44) |
| 60/40 | 1.48 (1.98) | 6.28 (6.43) | 1.08 (1.37) |
| 50/50 | 1.83 (2.40) | 6.62 (6.88) | 1.00 (1.29) |
| 40/60 | 2.37 (2.81) | 7.11 (7.33) | 0.94 (1.21) |
| 30/70 | 2.82 (3.23) | 7.62 (7.78) | 0.93 (1.14) |
| 20/80 | 3.39 (3.65) | 8.08 (8.24) | 0.91 (1.06) |
| 10/90 | 3.82 (4.06) | 8.55 (8.69) | 0.92 (0.99) |
| 0/100 | 4.48 | 9.14 | 0.91 |

Example 5

Example 1 was repeated using an aldoxime solution (in Escaid® 100) which was 0.33 molar in 2-hydroxy-5-nonyl benzaldoxime and 0.23 molar in tridecanol. Experimental data obtained are set out in Table VIII below.

TABLE VIII

| Solution Ratio #1/#2 | Stripped Organic Actual (Predicted) | Loading O/A = 1/1 Organic Actual/ (Predicted) | Aqueous Actual/ (Predicted) |
|---|---|---|---|
| 100/0 | 0.20 | 4.35 | 1.40 |
| 90/10 | 0.48 (0.51) | 4.60 (4.73) | 1.23 (1.32) |
| 80/20 | 0.74 (0.82) | 5.00 (5.11) | 1.08 (1.23) |
| 70/30 | 0.95 (1.13) | 5.40 (5.50) | 0.98 (1.15) |
| 60/40 | 1.27 (1.44) | 5.75 (5.88) | 0.99 (1.06) |
| 50/50 | 1.56 (1.75) | 6.12 (6.26) | 0.94 (0.98) |
| 40/60 | 1.95 (2.05) | 6.50 (6.64) | 0.80 (0.90) |
| 30/70 | 2.22 (2.36) | 6.70 (7.02) | 0.73 (0.81) |
| 20/80 | 2.49 (2.67) | 6.90 (7.41) | 0.67 (0.72) |
| 10/90 | 2.93 (2.98) | 7.70 (7.79) | 0.62 (0.64) |
| 0/100 | 3.29 | 8.17 | 0.56 |

Example 6

Extractant solutions employed were: (1) a 0.36 molar solution of 2-hydroxy-5-nonyl benzophenone oxime in Escaid® 100; and (2) a 0.32 molar solution of 2-hydroxy-5-nonyl benzaldoxime in Escaid® 100. The individual solutions and reagent mixtures thereof were equilibrated with 2 acid copper solutions, one containing 180 g/l sulfuric acid and 30 g/l $Cu^{+2}$ and the other containing 150 g/l sulfuric acid and 30 g/l $Cu^{+2}$, by contacting each organic 3 times with the proper fresh aqueous solution for 3 minutes each contact. The respective stripped organics from the equilibration with the 180 g/l $H_2SO_4$, 30 g/l $Cu^{+2}$ contact were then contacted at an O/A of 1/2 with a copper sulfate solution containing 5.36 g/l Cu, 1 g/l $Fe^{3+}$, pH=1.9 for 3 minutes. The organic and aqueous phases were then analyzed and the data obtained are set out in Table IX below.

TABLE IX

| Solution Ratio #1/#2 | Stripped Organic Actual (Predicted) 180 g/l $H_2SO_4$ | 150 g/l $H_2SO_4$ | Loading O/A = 1/2 Organic Actual/ (Predicted) | Aqueous Actual/ (Predicted) |
|---|---|---|---|---|
| 100/0 | 0.24 | 0.47 | 6.22 | 2.26 |
| 70/30 | 1.12 (1.77) | 2.04 (2.50) | 7.92 (7.71) | 1.82 (2.29) |
| 50/50 | 1.96 (2.79) | 3.32 (3.85) | 8.86 (8.70) | 1.76 (2.31) |
| 30/70 | 3.12 (3.80) | 4.80 (5.20) | 9.87 (9.69) | 1.85 (2.33) |
| 0/100 | 5.33 | 7.23 | 11.18 | 2.36 |

Example 7

Extractant solutions employed were: (1) a 12.4 weight/volume percent solution of 2-hydroxy-5-nonyl (0.36 molar) in Exxon Aromatic 150; and (2) an 8.25 weight/volume percent solution of 2-hydroxy-8-octyl benzaldoxime (0.26 M) in Exxon Aromatic 150. The aldoxime stock employed was prepared using a predominantly single isomeric form of octylphenol as a starting material and had a purity of 74%, with the balance of the stock predominantly octyl phenol starting material. Solutions and mixtures thereof were tested as in Example 1 and the stripped organic data obtained is set out in Table X below.

TABLE X

| Solution Ratio #1/#2 | Stripped Organic Actual (Predicted) |
|---|---|
| 100/0 | 0.18 |
| 70/30 | 0.84 (1.08) |
| 50/50 | 1.44 (1.68) |
| 30/70 | 2.08 (2.27) |
| 0/100 | 3.17 |

Example 8

The organic solutions described in Example 6 were equilibrated with stripping solution as described in Example 1. 100 ml of the respective filtered organic solution and 100 ml of an aqueous solution containing 6.0 g/l $Cu^{+2}$, 3 g/l $Fe^{+3}$ at a pH of 2.0, were carefully added to a 2¼ by 2¼ by 4 inch (5.72 × 5.72 × 10.16 cm) mixer box. Mixing at 1800 rpm's with a 1¼ inch (3.18 cm) impeller was started and samples of the emulsion removed at the indicated times. After the phases separated the organic phase was filtered and analyzed for copper. The results are shown below.

TABLE XI

| Time | Solution #1 g/l Copper | Solution #1 % Equil. | 50/50 mix g/l Copper | 50/50 mix % Equil. | Solution #2 g/l Copper | Solution #2 % Equil. |
|---|---|---|---|---|---|---|
| 0 | 0.24 | 0 | 1.96 | | 5.09 | |
| 30 | 3.12 | 64.3 | 6.42 | 91.6 | 9.42 | 98.4 |
| 60 | 3.70 | 77.2 | 6.76 | 96.4 | 9.47 | 99.0 |
| 300 | 4.72 | 100 | 7.01 | 100 | 9.57 | 100 |

The expected % equilibrium values for the 50/50 mix at 30 and 60 seconds are 82.3 and 88.7, respectively, thus the 50/50 mix extracts copper at a faster rate than expected.

Example 9

The organic solutions described in Example 3 were studied kinetically using the method described in Example 8. The results are shown below.

EXAMPLE XII

| Time | Solution #1 g/l Copper | Solution #1 % Equil. | 50/50 mix g/l Copper | 50/50 mix % Equil. | Solution #2 g/l Copper | Solution #2 % Equil. |
|---|---|---|---|---|---|---|
| 0 | 0.12 | | 1.71 | | 5.09 | |
| 30 | 2.68 | 67.2 | 5.93 | 91.0 | 9.42 | 98.34 |
| 60 | 3.21 | 80.5 | 6.26 | 96.0 | 9.47 | 99.0 |
| 300 | 3.99 | 100 | 6.52 | 100 | 9.57 | 100 |

The 30 and 60 second % equilibrium expected values for the 50/50 mix would be 82.8 and 89.8% respectively, thus the kinetics of the 50/50 mix are significantly faster than expected.

The following examples 10 through 13 provide an illustration of properties of reagent formulations which are outside the scope of the present invention.

Example 10

This example relates to the properties of two extractant solutions (and of mixtures of these solutions) wherein the active extractant chemicals of both are hydroxy aryl ketoximes comprehended by Formulas I or II and wherein no hydroxy aryl aldoxime extractant of Formula III is included. The solutions tested were: (1) a 32 v/v percent solution of LIX® 64N (0.36 molar in 2-hydroxy-5-nonyl benzophenone oxime and 0.0225 molar in 5-8-diethyl-7-hydroxydodecan-6-oxime) in Escaid® 100; and (2) a 19.2 v/v percent solution of SME 530 (as described in Example 2, above) in Escaid® 100. Solutions were tested individually and as mixtures in volume/volume ratios of 70/30, 50/50 and 30/70 under the conditions and according to the procedures of Example 1. Stripped organic and raffinate values in grams/liter copper are set out in Table XIII below and indicate no significant departure in properties of the mixed solutions from those properties predicted on the basis of results for the individual solutions.

TABLE XIII

| Solution Ratio #1/#2 | Stripped Organic Actual (Predicted) | Loading O/A = 1/1 Organic Actual/ (Predicted) | Loading O/A = 1/1 Aqueous Actual/ (Predicted) |
|---|---|---|---|
| 100/00 | 0.22 | 4.48 | 1.40 |
| 70/30 | 0.24 (0.24) | 4.57 (4.59) | 1.34 (1.32) |
| 50/50 | 0.25 (0.25) | 4.65 (4.66) | 1.32 (1.28) |
| 30/70 | 0.27 (0.26) | 4.71 (4.73) | 1.25 (1.22) |
| 0/100 | 0.28 | 4.84 | 1.15 |

Example 11

This example relates to properties of two extractant solutions (and of mixtures of these solutions) wherein the active extractant in one is an hydoxy aryl aldoxime of Formula I and the active extractant of the other is an hydroxy aryl ketoxime not comprehended by Formulas I and II. The solutions tested were: (1) a 31 v/v percent solution of LIX® 70 (0.35 molar in 2-hydroxy-3-chloro-5-nonyl benzophenone oxime and 0.0218 molar in Escaid® 100; and (2) a 20 v/v percent solution of 94 percent acitve 2-hydroxy-5-nonyl benzaldoxime (0.32 molar) in Escaid® 100. Solutions were tested individually and as mixtures in volume/volume ratios of 70/30, 50/50 and 30/70 under conditions and according to the procedures of Example 1. Stripped organic values in grams/liter copper are set out in Table XIV below and indicate no significant departure from those properties predicted on the basis of results for individual solutions.

TABLE XIV

| Solution Ratio #1/#2 | Stripped Organic Actual (predicted) |
|---|---|
| 100/0 | 5.83 |
| 70/30 | 5.68 (5.66) |
| 50/50 | 5.55 (5.55) |
| 30/70 | 5.43 (5.44) |
| 0/100 | 5.27 |

Example 12

This example republishes experimental results reported in Tumilty, et al., [*Adv. in Extractive Metallurgy Int'l. Symp. 3rd,* pp. 123—131, 1977 (London)] for use of two reagents (and mixtures thereof) wherein the active extractant chemical in one was an hydroxy aryl ketoxime according to Formula I and the active extractant of the other was an hydroxy aryl aldoxime comprehended by Formula III, but wherein the equilibrium modifier content was such as provided a degree of modification for the aldoxime which was less than 0.60. The reagents solutions tested were: (1) 25 v/v percent solution of LIX® 64N (0.28 molar in 2-hydroxy-5-nonyl benzophenone oxime and 0.0176 molar in 5-8-diethyl-7-hydroxy dodecan-6-oxime); and (2) v/v percent solution of Acorga P—5300 (0.225 molar in 2-hydroxy-5-nonyl benzaldoxime and 0.80 molar in nonylphenol modifier) in Ecaid® 100. Reagent solutions were reported to have been tested individually and as mixtures in volume/volume ratios of 75/25, 50/50 and 25/75 under specified conditions. Stripped organic values from Table 4 of the publication are set out in Table XV below and indicate no significant departure in properties of the mixed solutions from those properties predicted on the basis of results for the individual solutions.

TABLE XV

| Solution Ratio #1/#2 | Stripped Organic Actual (Predicted) |
|---|---|
| 100/0 | 0.50 |
| 75/25 | 0.75 (0.78) |
| 50/50 | 1.00 (1.05) |
| 25/75 | 1.30 (1.32) |
| 0/100 | 1.60 |

It is additionally noteworthy that Table 4 of the publication reports a series of variations in extraction stage efficiencies for above noted solution mixtures which are precisely linear (86.0, 87.5, 89.0, 90.5 and 92.0 percent) indicating no departure in kinetic properties of the mixed solutions from those predicted on the basis of kinetic characteristics of the individual reagents.

Example 13

This example republishes experimental results reported by Ritcey, et al., in *CIM Bulletin,* pp. 87—92, February, 1974, for use of two reagents (and mixtures thereof) wherein the active extractant chemical in one was an hydroxy aryl ketoxime according to Formula I and the active extractant of the other was an hydroxy quinoline compound. The reagent solutions tested were: (1) a 7 v/v percent solution of LIX® 64N (0.079 molar in 2-hydroxy-5-nonyl benzophenone oxime and 0.005 molar in 5,8-diethyl-7-hydroxydodecan-6-oxime) in Escaid® 100; and (2) a 7 v/v percent solution of Kelex 100 (0.175 molar in 7-[3-(5,5,7,7-tetramethyl-1-octenyl)]-8-hydroxyquinoline) in Escaid® 100. Reagent solutions were reported to have been

tested individually and as mixtures in volume/volume ratios of 10/90, 30/70, 50/50, 70/30 and 90/10 under specified conditions. Loaded organic values from Figure 2 of the publication are set out in Table XVI below and indicate no significant departure in properties predicted on the basis of results for individual solutions.

TABLE XVI

| Solution Ratio #1/#2 | Loaded Organic* Actual (Predicted) |
|---|---|
| 100/0 | ~1.70 |
| 90/10 | ~2.10 (~2.00) |
| 70/30 | ~2.66 (~2.66) |
| 50/50 | ~3.45 (~3.40) |
| 30/70 | ~4.05 (~4.05) |
| 10/90 | ~4.80 (~4.75) |
| 0/100 | ~5.20 |

* Estimated from graphic display of data points.

Numerous modifications and variations in practice of the invention as described in the above illustrative examples are expected to occur to those skilled in the art. As one example, while the foregoing Example 1 through 9 illustrate reagents of the invention comprising mixtures of a single hydroxy aryl ketoxime extractant and a single hydroxy aryl aldoxime, reagents comprising more than one ketoxime and/or more than one aldoxime are certainly contemplated.

**Claims for the Contracting States: BE DE FR GB NL SE**

1. A composition useful for extracting copper from an aqueous solution and containing a reagent composition comprising:

(a) one or more hydroxy aryl ketoxime compounds of Formula I

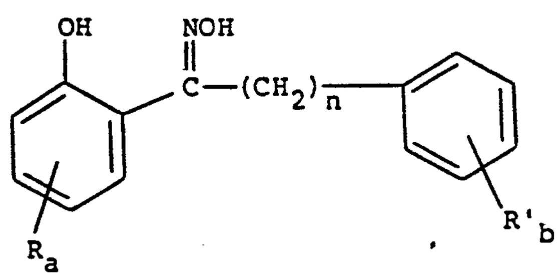

(I)

(in which R and R′, which may be the same or different, each represents a saturated aliphatic group having 1—25 carbon atoms, an ethylenically unsaturated aliphatic group having 3—25 carbon atoms or a group of formula —OR″ where R″ represents a saturated aliphatic group having 1—25 carbon atoms or an ethylenically unsaturated aliphatic group having 3—25 carbon atoms; *n* is 0 or 1; and each of *a* and *b*, which may be the same or different, is 0, 1, 2, 3 or 4, the sum of a and b being at least 1; with the proviso that the total number of carbon atoms in $R_a$ and $R'_b$ is from 3 to 25) or Formula II

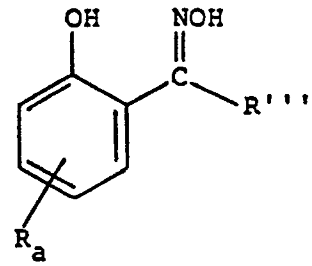

(II)

(in which R represents a saturated aliphatic group having 1—25 carbon atoms, an ethylenically unsaturated aliphatic group having 3—25 carbon atoms or a group of formula —OR″ where R″ represents a saturated aliphatic group having 1—25 carbon atoms or an ethylenically unsaturated aliphatic group having 3—25 carbon atoms; *a* is 0, 1, 2, 3 or 4; and R‴ represents a saturated aliphatic group having 1—25 carbon atoms or an ethylenically unsaturated aliphatic group having 3—25 carbon atoms; with the proviso that the total number of carbon atoms in $R_a$ and R‴ is from 3 to 25);

(b) one or more hydroxy aryl aldoxime compounds of Formula III

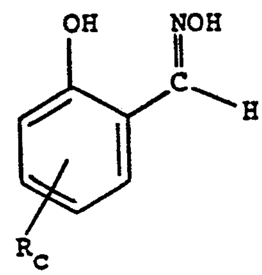

(III)

(in which R represents a saturated aliphatic group having 1—25 carbon atoms, an ethylenically unsaturated aliphatic group having 3—25 carbon atoms or a group of formula —OR″ where R″ represents a saturated aliphatic group having 1—25 carbon atoms or an ethylenically unsaturated aliphatic group having 3—25 carbon atoms; C is 1, 2, 3 or 4; and the total number of carbon atoms in $R_c$ is from 3 to 25);

(c) a kinetic additive substance in an amount of from 0 to 20 mole percent based on the hydroxy aryl ketoxime present; and,

(d) an extraction and stripping equilibrium modifier substance in an amount providing for a degree of modification of the hydroxyl aryl aldoxime present of from about 0.66 to about 1.0; where the said modifier is other than nonylphenol and from about 0.898 to 1.0 where the said modifier is nonylphenol;

(e) the mole ratio of the hydroxy aryl ketoxime present to the hydroxy aryl aldoxime present being from 1:100 to 100:1, whereby said degree of modification designates the inverse ratio of

(i) the stripped solvent copper level of the hydroxy aryl aldoxime at equilibrium with an aqueous strip solution being 150 g/l sulfuric acid and 10 g/l $Cu^{2+}$ to

(ii) the stripped solvent copper level of the said aldoxime under the same conditions when the equilibrium modifier additive is present, and

whereby for the determination of the degree of modification, the temperature is of about 24°C, the molar concentration of aldoxime or mixture of aldoximes in the diluent if about 0.184 as determined by copper value loading and titration, an aldoxime stock of approximately 94 percent purity, the remainder being substantially alkyl phenol starting material residue employed, the diluent for the hydroxy aryl aldoxime is Escaid® 100 or a mixture of aliphatic and aromatic hydrocarbons closely approximating the constitution of Escaid® 100, an atomic absorption methodology being employed for determining copper value content.

2. A composition as claimed in claim 1 containing one or more hydroxy aryl ketoximes of Formula I as defined in claim 1.

3. A composition as claimed in either of claims 1 and 2 containing one or more hydroxy aryl ketoximes of Formula II as defined in claim 1.

4. A composition as claimed in any one of the claims 1 to 3 wherein compounds of Formulae I, II or III as defined in claim 1 satisfy one or more of the following requirements:

(a) in a compound of Formula I, a is 1 and b is 0;

(b) in a compound of Formula I, n is 0;

(c) in a compound of Formula I, n is 1;

(d) in a compound of Formula II, a is 1;

(e) in a compound of Formula II, R‴ represents a methyl group;

(f) in a compound of Formula III, c is 1;

(g) in one or more of the compounds of Formulae I, II and III, R represents a saturated aliphatic group having 7 to 12 carbon atoms attached to the phenyl group at a position para to the hydroxyl; and

(h) in one or more of the compounds of Formulae I, II and III, the groups represented by R comprise a mixture of isomers.

5. A composition as claimed in any one of claims 1 to 4 comprising at least one hydroxy aryl ketoxime selected from:

2-hydroxy-5-nonyl benzophenone oxime;
2-hydroxy-5-dodecyl benzophenone oxime;
2-hydroxy-5-nonyl phenyl benzyl ketone oxime; and
2-hydroxy-5-nonyl phenyl methyl ketone oxime.

6. A composition as claimed in any one of claims 1 to 5 comprising at least one hydroxy aryl aldoxime selected from:

2-hydroxy-5-heptyl benzaldoxime;
2-hydroxy-5-octyl benzaldoxime;
2-hydroxy-5-nonyl benzaldoxime; and
2-hydroxy-5-dodecyl benzaldoxime.

7. A composition as claimed in any one of claims 1 to 6 wherein components (a) and (b) are selected from the following:

(i) 2-hydroxy-5-nonyl benzophenone oxime and 2-hydroxy-5-nonyl benzaldoxime;
(ii) 2-hydroxy-5-nonyl benzophenone oxime and 2-hydroxy-5-dodecyl benzaldoxime;
(iii) 2-hydroxy-5-nonyl phenyl methyl ketone oxime and 2-hydroxy-5-nonyl benzaldoxime; and
(iv) 2-hydroxy-5-nonyl phenyl methyl ketone oxime and 2-hydroxy-5-dodecyl benzaldoxime.

8. A composition as claimed in any one of claims 1 to 7 wherein the mole ratio of the hydroxy aryl ketoxime present to the hydroxy aryl aldoxime present is from 1:4 to 4:1.

9. A composition as claimed in any one of claims 1 to 8 containing a kinetic additive substance as selected from α-hydroxy-oximes and α,β-dioximes.

10. A composition as claimed in claim 9 comprising as a kinetic additive substance 5,8-diethyl-7-hydroxy-dodecan-6-oxime or a mixture of 1-(4'-alkylphenyl)-1,2-propane-dione dioximes.

11. A composition as claimed in any one of claims 1 to 10 wherein a kinetic additive substance is present in an amount of from 0.01 to 5 mole percent based on the hydroxy aryl ketoxime present.

12. A composition as claimed in any one of claims 1 to 11 containing an extraction and stripping equilibrium modifier substance selected from: $C_6$ to $C_{20}$ aliphatic alcohols; $C_6$ to $C_{20}$ alkylphenols; and organophosphorus compounds.

13. A composition as claimed in claim 12 containing an extraction and stripping equilibrium modifier substance selected from: n-hexanol; n-octanol; 2-ethyl hexanol; isodecanol; dodecanol; tridecanol; hexadecanol; octadecanol; heptylphenol; octylphenol; nonylphenol; dodecylphenol; tributyl phosphate; and tri(2-ethylhexyl) phosphate.

14. A composition as claimed in any one of claims 1 to 13 wherein an extraction and stripping equilibrium modifier substance is present in an amount providing for a degree of modification of the hydroxy aryl aldoxime present of from about 0.75 to 0.99 where the said modifier is other than nonylphenol.

15. A process for the extraction of copper from an aqueous solution comprising;

(1) contacting the aqueous solution with an organic phase comprising a water-immiscible solvent and a reagent composition as defined in claim 1 to extract at least a portion of the copper value into the organic phase;

(2) separating the resultant copper value pregnant organic phase from the aqueous phase; and

(3) recovering copper values from the metal value pregnant organic phase.

16. The use for the recovery of metal values from aqueous solutions of reagents containing at least one hydroxy aryl ketoxime of Formula I and/or II as defined in claim 1 and at least one hydroxy aryl aldoxime of Formula III as defined in claim 1.

**Claims for the Contracting State: AT**

1. A process for the recovery of copper values from an aqueous solution comprising (1) contacting the aqueous solution with an organic phase comprising a water-immiscible solvent and a reagent composition to extract at least a portion of the metal values into the organic phase; (2) separating the resultant metal value pregnant organic phase from the aqueous phase; and (3) recovering copper values from the metal value pregnant organic phase, characterised in that the said reagent composition is a composition comprising:

(a) one or more hydroxy aryl ketoxime compounds of Formula I:

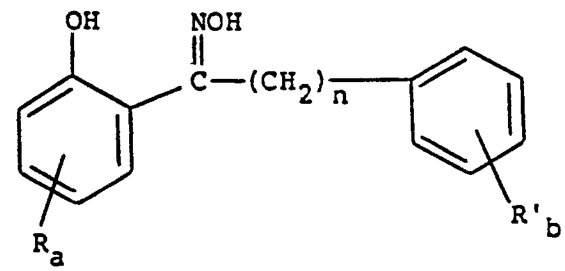

(I)

(in which R and R′, which may be the same or different, each represents a saturated aliphatic group having 1—25 carbon atoms, an ethylenically unsaturated aliphatic group having 3—25 carbon atoms or a group of formula —OR″ where R″ represents a saturated aliphatic group having 1—25 carbon atoms or an ethylenically unsaturated aliphatic group having 3—25 carbon atoms; *n* is 0 or 1; and each of *a* and *b*, which may be the same or different, is 0, 1, 2, 3 or 4, the sum of a and b being at least 1; with the proviso that the total number of carbon atoms in $R_a$ and $R'_b$ is from 3 to 25) or Formula II

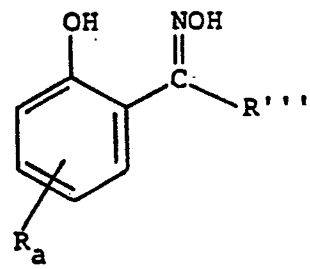

(II)

(in which R represents a saturated aliphatic group having 1—25 carbon atoms, an ethylenically unsaturated aliphatic group having 3—25 carbon atoms or a group of formula —OR″ where R″ represents a saturated aliphatic group having 1—25 carbon atoms or an ethylenically unsaturated aliphatic group having 3—25 carbon atoms; *a* is 0, 1, 2, 3 or 4; and R‴ represents a saturated aliphatic group having 1—25 carbon atoms or an ethylenically unsaturated aliphatic group having 3—25 carbon atoms; with the proviso that the total number of carbon atoms in $R_a$ and R‴ is from 3 to 25);

(b) one or more hydroxy aryl aldoxime compounds of Formula III

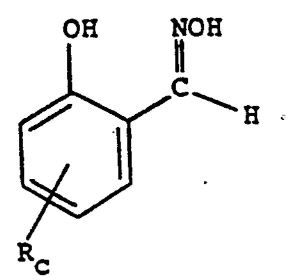

(III)

(in which R represents a saturated aliphatic group having 1—25 carbon atoms, an ethylenically unsaturated aliphatic group having 3—25 carbon atoms or a group of formula —OR″ where R″ represents a saturated aliphatic group having 1—25 carbon atoms or an ethylenically unsaturated aliphatic group having 3—25 carbon atoms; C is 1, 2, 3 or 4; and the total number of carbon atoms in $R_c$ is from 3 to 25);

(c) a kinetic additive substance in an amount of from 0 to 20 mole percent based on the hydroxy aryl ketoxime present; and,

(d) an extraction and stripping equilibrium modifier substance in an amount providing for a degree of modification of the hydroxy aryl aldoxime present of from about 0.66 to about 1.0; where the said modifier is other than nonylphenol and from about 0.898 to 1.0 where the said mofifier is nonylphenol;

(e) the mole ratio of the hydroxy aryl ketoxime present to the hydroxy aryl aldoxime present being from 1:100 to 100:1, whereby said degree of modification designates the inverse ratio of

(i) the stripped solvent copper level of the hydroxy aryl aldoxime at equilibrium with an aqueous strip solution being 150 g/l sulfuric acid and 10 g/l $Cu^{2+}$ to

(ii) the stripped solvent copper level of the said aldoxime under the same conditions when the

equilibrium modifier additive is present, and
whereby for the determination of the degree of modification, the temperature is of about 24°C, the molar concentration of aldoxime or mixture of aldoximes in the diluent is about 0.184 as determined by copper value loading and titration, an aldoxime stock of approximately 94 percent purity, the remainder being substantially alkyl phenol starting material residue employed, the diluent for the hydroxy aryl aldoxime is Escaid® 100 or a mixture of aliphatic and aromatic hydrocarbons closely approximating the constitution of Escaid® 100, an atomic absorption methodology being employed for determining copper value content.

2. A process as claimed in claim 1 wherein the said reagent composition contains one or more hydroxy aryl ketoximes of formula I as defined in claim 1.

3. A process as claimed in either of claims 1 and 2 wherein the said reagent composition contains one or more hydroxy aryl ketoximes of Formula II as defined in claim 1.

4. A process as claimed in any one of the claims 1 to 3 wherein the said reagent composition contains compounds of Formulae III, II and/or I which satisfy one or more of the following requirements:

(a) in a compound of Formula I, a is 1 and b is 0;
(b) in a compound of Formula I, n is 0;
(c) in a compound of Formula I, n is 1;
(d) in a compound of Formula II, a is 1;
(e) in a compound of Formula II, R''' represents a methyl group;
(f) in a compound of Formula III, c is 1;
(g) in one or more of the compounds of Formulae I, II and III, R represents a saturated aliphatic group having 7 to 12 carbon atoms attached to the phenyl group at a position *para* to the hydroxyl; and
(h) in one or more of the compounds of Formulae I, II and III, the groups represented by R comprise a mixture of isomers.

5. A process as claimed in any one of claims 1 to 4 wherein the said reagent composition contains at least one hydroxy aryl ketoxime selected from:

2-hydroxy-5-nonyl benzophenone oxime;
2-hydroxy-5-dodecyl benzophenone oxime;
2-hydroxy-5-nonyl phenyl benzyl ketone oxime; and
2-hydroxy-5-nonyl phenyl methyl ketone oxime.

6. A process as claimed in any one of claims 1 to 5 wherein the said reagent composition contains one hydroxy aryl aldoxime selected from:

2-hydroxy-5-heptyl benzaldoxime;
2-hydroxy-5-octyl benzaldoxime;
2-hydroxy-5-nonyl benzaldoxime; and
2-hydroxy-5-dodecyl benzaldoxime.

7. A process as claimed in any one of claims 1 to 6 wherein the said water-immiscible organic solvent comprises kerosene.

8. A process as claimed in any one of claims 1 to 7 wherein the copper values are recovered from the metal value pregnant organic phase by stripping with the use of an acid.

9. A process as claimed in any one of claims 1 to 8 wherein the said aqueous solution from which copper values are recovered has a pH of from 0.5 to 7.0.

10. The use for the recovery of metal values from aqueous solutions of reagents containing at least one hydroxy aryl ketoxime of Formula I and/or Formula II as defined in claim 1 and at least one hydroxy aryl aldoxime of Formula III as defined in claim 1.

11. A method of formulating a reagent composition for the recovery of copper values from aqueous solutions which method comprises the admixture of

(a) one or more hydroxy aryl ketoxime compounds of Formula I as defined in claim 1
(b) one or more hydroxy aryl aldoxime compounds of Formula III as defined in claim 1
(c) a kinetic additive substance in an amount of from 0 to 20 mole percent based on the hydroxy aryl ketoxime present; and,
(d) an extraction and stripping equilibrium modifier substance in an amount providing for a degree of modification of the hydroxy aryl aldoxime present of from about 0.66 to about 1.0 where the said modifier is other than nonylphenol and from about 0.898 to 1.0 where the said modifier is nonylphenol; the hydroxy aryl ketoxime and hydroxy aryl aldoxime components being admixed in a mole ratio of from 1:100 to 100:1, whereby said degree of modification is defined in claim 1.

**Patentansprüche für die Vertragsstaaten: BE DE FR GB NL SE**

1. Zusammensetzung, geeignet zum Extrahieren von Kupfer aus einer wäßrigen Lösung und enthaltend eine Reagens-Zusammensetzung, die umfaßt:

(a) eine odere mehrere Hydroxyarylketoxim-Verbindungen der Formel I

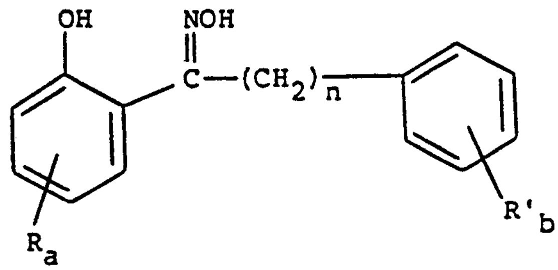

(I)

(in der R und R', die gleich oder verschieden sein können, jeweils eine gesättigte aliphatische Gruppe mit 1 bis 25 Kohlenstoff-Atomen, eine ethylenisch ungesättigte aliphatische Gruppe mit 3 bis 25 Kohlenstoff-Atomen oder eine Gruppe der Formel —OR" bezeichnen, in der R" eine gesättigte aliphatische Gruppe mit 1 bis 25 Kohlenstoff-Atomen oder eine ethylenisch ungesättigte aliphatische Gruppe mit 3 bis 25 Kohlenstoff-Atomen bezeichnet; *n* 0 oder 1 ist; und *a* und *b*, die gleich oder verschieden sein können, jeweils 0, 1, 2, 3 oder 4 sind, wobei die Summe von *a* und *b* wenigstens 1 beträgt; mit der Maßgabe, daß die Gesamtzahl der Kohlenstoff-Atome in $R_a$ und $R'_b$ 3 bis 25 beträgt; oder der Formel II

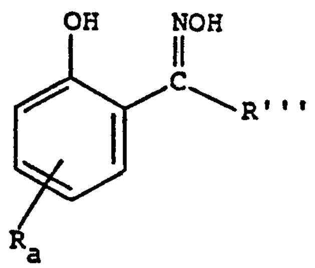

(II)

(in der R eine gesättigte aliphatische Gruppe mit 1 bis 25 Kohlenstoff-Atomen, eine ethylenisch ungesättigte aliphatische Gruppe mit 3 bis 25 Kohlenstoff-Atomen oder eine Gruppe der Formel —OR" bezeichnet, in der R" eine gesättigte aliphatische Gruppe mit 1 bis 25 Kohlenstoff-Atomen oder eine ethylenisch ungesättigte aliphatische Gruppe mit 3 bis 25 Kohlenstoff-Atomen bezeichnet; *a* 0, 1, 2, 3 oder 4 ist; und R''' eine gesättigte aliphatische Gruppe mit 1 bis 25 Kohlenstoff-Atomen oder eine ethylenisch ungesättigte aliphatische Gruppe mit 3 bis 25 Kohlenstoff-Atomen bezeichnet; mit der Maßgabe, daß die Gesantzahl der Kohlenstoff-Atome in $R_a$ und R''' 3 bis 25 beträgt);

(b) eine oder mehrere Hydroxyarylaldoxim-Verbindungen der Formel III

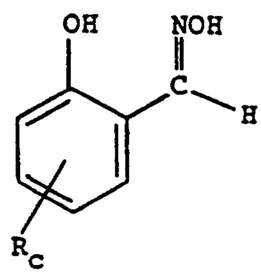

(III)

(in der R eine gesättigte aliphatische Gruppe mit 1 bis 25 Kohlenstoff-Atomen, eine ethylenisch ungesättigte aliphatische Gruppe mit 3 bis 25 Kohlenstoff-Atomen oder eine Gruppe der Formel —OR" bezeichnet, in der R" eine gesättigte aliphatische Gruppe mit 1 bis 25 Kohlenstoff-Atomen oder eine ethylenisch ungesättigte aliphatische Gruppe mit 3 bis 25 Kohlenstoff-Atomen bezeichnet; *c* 1, 2, 3 oder 4 ist und daß die Gesamtzahl der Kohlenstoff-Atome in $R_c$ 3 bis 25 beträgt;

(c) eine Substanz als kinetisches Additiv in einer Menge von 0 bis 20 Mol-%, bezogen auf das vorhandene Hydroxyarylketoxim;

(d) eine Substanz zur Modifizierung des Extraktions- und Abstreif-Gleichgewichts in einer Menge, die einen Grad der Modifizierung des vorhandenen Hydroxyarylaldoxims von etwa 0,66 auf etwa 1,0 in dem Fall, in dem diese modifizierende Substanz von Nonylphenol verschieden ist, und von etwa 0,898 auf 1,0 in dem Fall, in dem diese modifizierende Substanz Nonylphenol ist, herbeiführt;

(e) wobei das Stoffmengen-Verhältnis ("Molverhältnis") des vorhandenen Hydroxyarylketoxim zu dem vorhandenen Hydroxyarylaldoxim 1:100 bis 100:1 beträgt,

wobei der Grad der Modifizierung das umgekehrte Verhältnis

(i) des Kupfer-Wertes des Hydroxyarylaldoxims des abgestreiften Lösungsmittels im Gleichgewicht

mit einer wäßrigen Abstreif-Lösung, die aus 150 g/l Schwefelsäure und 30 g/l $Cu^{2+}$ besteht, zu

(ii) dem Kupfer-Wert dieses Aldoxims des abgestreiften Lösungsmittels unter den gleichen Bedingungen bei Anwesenheit des das Gleichgewicht modifizierung Additivs ist,

bezeichnet, wobei für die Bestimmung des Grades der Modifizierung die Temperatur etwa 24°C beträgt, die molare Konzentration des Aldoxims oder der Aldoxim-Gemische in dem Verdünnungsmittel etwa 0,184 beträgt, bestimmt durch Beladung mit einem Kupfer-Wert und Titration, bei Einstaz eines Aldoxim-Stamm-Materials von etwa 94% Reinheit, wobei der Rest im wesentlichen Alkylphenol-Ausgangsmaterial ist, das Verdünnungsmittel für das Hydroxyarylaldoxim Escaid® 100 oder eine der Konstitution von Escaid® 100 dicht angenäherte Mischung aliphatischer oder aromatischer Kohlenwasserstoffe ist, wobei zur Bestimmung des Kupfer-Wertes eine Atom-Absorptions-Methode angewandt wird.

2. Zusammensetzung nach Anspruch 1, enthaltend ein oder mehrere Hydroxyarylketoxime der Formel I nach Anspruch 1.

3. Zusammensetzung nach einem der Ansprüche 1 und 2, enthaltend ein oder mehrere Hydroxyarylketoxime der Formel II nach Anspruch 1.

4. Zusammensetzung nach irgendeinem der Ansprüche 1 bis 3, worin die Verbindungen der Formeln I, II oder III nach Anspruch 1 eine oder mehrere der folgenden Bedingungen erfüllen:

(a) In einer Verbindung der Formel I ist a 1 und b ist 0;

(b) in einer Verbindung der Formel I ist n 0;

(c) in einer Verbindung der Formel I ist n 1;

(d) in einer Verbindung der Formel II ist a 1;

(e) in einer Verbindung der Formel II bezeichnet R''' eine Methyl-Gruppe;

(f) in einer Verbindung der Formel III ist c 1;

(g) in einer oder mehreren der Verbindungen der Formeln I, II und III bezeichnet R eine gesättigte aliphatische Gruppe mit 7 bis 12 Kohlenstoff-Atomen, die an den Phenyl-Kern in p-Stellung zu dem Hydroxyl gebunden sind; und

(h) in einer oder mehreren der Verbindungen der Formeln I, II und III umfassen die durch R bezeichneten Gruppen ein Isomeren-Gemisch.

5. Zusammensetzung nach irgendeinem der Ansprüche 1 bis 4, umfassend wenigstens ein Hydroxyarylketoxim, das aus

2-Hydroxy-5-nonylbenzophenonoxim,
2-Hydroxy-5-dodecylbenzophenonoxim,
2-Hydroxy-5-nonylphenylbenzylketonoxim, und
2-Hydroxy-5-nonylphenylmethylketonoxim

ausgewählt ist.

6. Zusammensetzung nach irgendeinem der Ansprüche 1 bis 5, umfassend wenigstens ein Hydroxyarylaldoxim, das aus

2-Hydroxy-5-heptylbenzaldoxim,
2-Hydroxy-5-octylbenzaldoxim,
2-Hydroxy-5-nonylbenzaldoxim, und
2-Hydroxy-5-dodecylbenzaldoxim,

ausgewählt ist.

7. Zusammensetzung nach irgendeinem der Ansprüche 1 bis 6, worin die Komponenten (a) und (b) aus den folgenden ausgewählt sind:

(i) 2-Hydroxy-5-nonylbenzophenonoxim und 2-Hydroxy-5-nonylbenzaldoxim;

(ii) 2-Hydroxy-5-nonylbenzophenonoxim und 2-Hydroxy-5-dodecylbenzaldoxim;

(iii) 2-Hydroxy-5-nonylphenylmethylketonoxim und 2-Hydroxy-5-nonylbenzaldoxim; und

(iv) 2-Hydroxy-5-nonylphenylmethylketonoxim und 2-Hydroxy-5-dodecylbenzaldoxim.

8. Zusammensetzung nach irgendeinem der Ansprüche 1 bis 7, worin das Stoffmengen-Verhältnis des vorhandenen Hydroxyarylketoxims zu vorhandenen Hydroxyarylaldoxim 1:4 zu 4:1 beträgt.

9. Zusammensetzung nach irgendeinem der Ansprüche 1 bis 8, enthaltend eine Substanz als kinetisches Additiv, ausgewählt aus α-Hydroxyoximen und α,ß-Dioximen.

10. Zusammensetzung nach Anspruch 9, umfassend als kinetische Additiv-Substanz 5,8-Diethyl-7-hydroxydodecan-6-oxim oder ein Gemisch aus 1-(4'-Alkylphenyl)-1,2-propandion-dioximen.

11. Zusammensetzung nach irgendeinem der Ansprüche 1 bis 10, worin eine kinetische additiv-Substanz in einer Menge von 0,01 bis 5 Mol-%, bezogen auf das vorhandene Hydroxyarylketoxim, vorliegt.

12. Zusammensetzung nach irgendeinem der Ansprüche 1 bis 11, enthaltend eine Substanz zur Modifizierung des Extraktions- und Abstreif-Gleichgewichts, ausgewählt aus aliphatischen $C_6$- bis $C_{20}$-Alkoholen, $C_6$- bis $C_{20}$-Alkylphenolen und phosphororganischen Verbindungen.

13. Zusammensetzung nach Anspruch 12, enthaltend eine Substanz zur Modifizierung des Extraktions- und Abstreif-Gleichgewichts, ausgwählt aus n-Hexanol, n-Octanol, 2-Ethylhexanol, Isodecanol, Dodecanol, Tridecanol, Hexadecanol, Octadecanol, Heptylphenol, Octylphenol, Nonylphenol, Dodecylphenol, Tributylphosphat und Tri-(2-ethylhexyl)phosphat.

14. Zusammensetzung nach irgendeinem der Ansprüche 1 bis 13, worin eine Substanz zur Modifizierung des Extraktions- und Abstreif-Gleichwichts in einer Menge vorliegt, die einen Grad der Modifizierung des vorhandenen Hydroxyarylaldoxims von etwa 0,75 auf etwa 0,99 in dem Fall, in dem

diese modifizierende Substanz von Nonylphenol verschieden ist, herbeiführt.

15. Verfahren zur Extraktion von Kupfer aus einer wäßrigen Lösung, umfassend

(1) das In-Berührung-Bringen der wäßrigen Lösung mit einer organischen Phase, die ein mit Wasser nicht mischbares Lösungsmittel und eine in Anspruch 1 definierte Reagens-Zusammensetzung umfaßt, zum Extrahieren wenigstens eines Teils des Kupfer-Wertes in die organische Phase;

(2) das Abtrennen der resultierenden, den Kupfer-Wert tragenden organischen Phase von der wäßrigen Phase; und

(3) das Isolieren der Kupfer-Werte aus der den Metall-Wert tragenden organischen Phase.

16. Verwendung von Reagentien, die wenigstens ein Hydroxyarylketoxim der Formel I und/oder II nach Anspruch 1 und wenigstens ein Hydroxyarylaldoxim der Formel III nach Anspruch 1 enthalten, zur Gewinnung von Metall-Werten aus wäßrigen Lösungen.

**Patentansprüche für den Vertragsstaat: AT**

1. Verfahren zur Gewinnung von Kupfer-Werten aus einer wäßrigen Lösung, umfassend

(1) das In-Berührung-Bringen der wäßrigen Lösung mit einer organischen Phase, die ein mit Wasser nicht mischbares Lösungsmittel und eine Reagens-Zusammensetzung umfaßt, zum Extrahieren wenigstens eines Teils des Metall-Werte in die organische Phase;

(2) das Abtrennen der resultierenden, den Metall-Wert tragenden organischen Phase von der wäßrigen Phase; und

(3) das Isolieren der Kupfer-Werte aus der den Metall-Wert tragenden organischen Phase, dadurch gekennzeichnet, daß die Reagens-Zusammensetzung eine Zusammensetzung ist, die umfaßt:

(a) eine oder mehrere Hydroxyarylketoxim-Verbindungen der Formel I

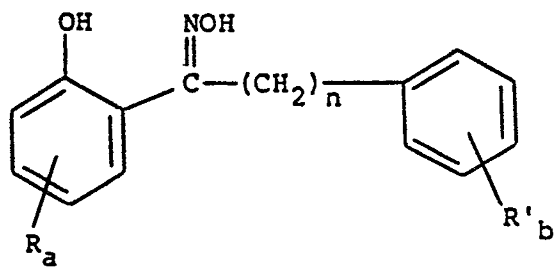

(I)

(in der R und R', die gleich oder verschieden sein können, jeweils eine gesättigte aliphatische Gruppe mit 1 bis 25 Kohlenstoff-Atomen, eine ethylenisch ungesättigte aliphatische Gruppe mit 3 bis 25 Kohlenstoff-Atomen oder eine Gruppe der Formel —OR'' bezeichnen, in der R'' eine gesättigte aliphatische Gruppe mit 1 bis 25 Kohlenstoff-Atomen oder eine ethylenisch ungesättigte aliphatische Gruppe mit 3 bis 25 Kohlenstoff-Atomen bezeichnet; *n* 0 oder 1 ist; und *a* und *b*, die gleich oder verschieden sein können, jeweils 0, 1, 2, 3 oder 4 sind, wobei die Summe von *a* und *b* wenigstens 1 beträgt; mit der Maßgabe, daß die Gesamtzahl der Kohlenstoff-Atome in $R_a$ und $R'_b$ 3 bis 25 beträgt; oder der Formel II

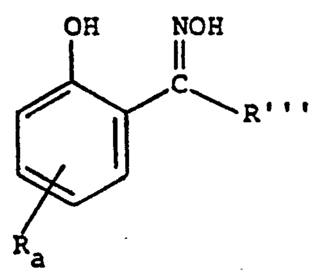

(II)

(in der R eine gesättigte aliphatische Gruppe mit 1 bis 25 Kohlenstoff-Atomen, eine ethylenisch ungesättigte aliphatische Gruppe mit 3 bis 25 Kohlenstoff-Atomen oder eine Gruppe der Formel —OR'' bezeichnet, in der R'' eine gesättigte aliphatische Gruppe mit 1 bis 25 Kohlenstoff-Atomen oder eine ethylenisch ungesättigte aliphatische Gruppe mit 3 bis 25 Kohlenstoff-Atomen bezeichnet; *a* 0, 1, 2, 3 oder 4 ist; und R''' eine gesättigte aliphatische Gruppe mit 1 bis 25 Kohlenstoff-Atomen oder eine ethylenisch ungesättigte aliphatische Gruppe mit 3 bis 25 Kohlenstoff-Atomen bezeichnet; mit der Maßgabe, daß die Gesamtzahl der Kohlenstoff-Atome in $R_a$ und R''' 3 bis 25 beträgt);

(b) eine oder mehrere Hydroxyarylaldoxim-Verbindungen der Formel III

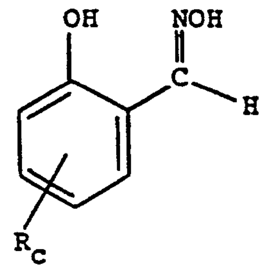

(III)

(in der R eine gesättigte aliphatische Gruppe mit 1 bis 25 Kohlenstoff-Atomen, eine ethylenisch ungesättigte aliphatische Gruppe mit 3 bis 25 Kohlenstoff-Atomen oder eine Gruppe der Formel —OR'' bezeichnet, in der R'' eine gesättigte aliphatische Gruppe mit 1 bis 25 Kohlenstoff-Atomen oder eine ethylenisch ungesättigte aliphatische Gruppe mit 3 bis 25 Kohlenstoff-Atomen bezeichnet; *c* 1, 2, 3 oder 4 ist und daß die Gesamtzahl der Kohlenstoff-Atome in $R_c$ 3 bis 25 beträgt);

(c) eine Substanz als kinetisches Additiv in einer Menge von 0 bis 20 Mol-%, bezogen auf das vorhandene Hydroxyarylketoxim;

(d) eine Substanz zur Modifizierung des Extraktions- und Abstreif-Gleichgewichts in einer Menge, die einen Grad der Modifizierung des vorhandenen Hydroxyaryldoxims von etwa 0,66 auf etwa 1,0 in dem Fall, in dem diese modifizierende Substanz von Nonyphenol verschieden ist, und von etwa 0,898 auf 1,0 in dem Fall, in dem diese modifizierende Substanz Nonylphenol ist, herbeiführt;

(e) wobei das Stoffmengen-Verhältnis ("Molverhältnis") des vorhandenen Hydroxyarylketoxim zu dem vorhandenen Hydroxyarylaldoxim 1:100 bis 100:1 beträgt,
wobei der Grad der Modifizierung das ungekehrte Verhältnis

(i) des Kupfer-Wertes des Hydroxyarylaldoxims des abgestreiften Lösungsmittels im Gleichgewicht mit einer wäßrigen Abstreif-Lösung, die aus 150 g/l Schwefelsäure und 30 g/l $Cu^{2+}$ besteht, zu

(ii) dem Kupfer-Wert dieses Aldoxims des abgestreiften Lösungsmittels unter den gleichen Bedingungen bei Anwesenheit des das Gleichgewicht modifizierung Additivs ist,
bezeichnet, wobei für die Bestimmung des Grades der Modifizierung die Temperatur etwa 24°C beträgt, die molare Konzentration des Aldoxims oder der Aldoxim-Gemische in dem Verdünnungsmittel etwa 0,184 beträgt, bestimmt durch Beladung mit einem Kupfer-Wert und Titration, bei Einsatz eines Aldoxim-Stamm-Materials von etwa 94% Reinheit, wobei der Rest im wesentlichen Alkylphenol-Ausgangsmaterial ist, das Verdünnungsmittel für das Hydroxyarylaldoxim Escaid® 100 oder eine der Konstitution von Escaid® 100 dicht angenäherte Mischung aliphatischer oder aromatischer Kohlenwasserstoffe ist, wobei zur Bestimmung des Kupfer-Wertes eine Atom-Absorptions-Methode angewandt wird.

2. Zusammensetzung nach Anspruch 1, worin die Reagens-Zusammensetzung ein oder mehrere Hydroxyarylketoxime der Formel I nach Anspruch 1.

3. Zusammensetzung nach einem der Ansprüche 1 und 2, die Reagens-Zusammensetzung ein oder mehrere Hydroxyarylketoxime der Formel II nach Anspruch 1 enthält.

4. Verfahren nach irgendeinem der Ansprüche 1 bis 3, worin die Reagens-Zusammensetzungen Verbindungen der Formeln I, II oder III enthält, die eine oder mehrere der folgenden Bedingungen erfüllen:

(a) In einer Verbindung der Formel I ist a 1 und b ist 0;
(b) in einer Verbindung der Formel I ist n 0;
(c) in einer Verbindung der Formel I ist n 1;
(d) in einer Verbindung der Formel II ist a 1;
(e) in einer Verbindung der Formel II bezeichnet R''' eine Methyl-Gruppe;
(f) in einer Verbindung der Formel III ist c 1;
(g) in einer oder mehreren der Verbindungen der Formeln I, II und III bezeichnet R eine gesättigte aliphatische Gruppe mit 7 bis 12 Kohlenstoff-Atomen, die an den Phenyl-Kern in p-Stellung zu dem Hydroxyl gebunden sind; und
(h) in einer oder mehreren der Verbindungen der Formeln I, II und III umfassen die durch R bezeichneten Gruppen ein Isomeren-Gemisch.

5. Verfahren nach irgendeinem der Ansprüche 1 bis 4, worin die Reagens-Zusammensetzung wenigstens ein Hydroxyarylketoxim, das aus
2-Hydroxy-5-nonylbenzophenonoxim,
2-Hydroxy-5-dodecylbenzophenonoxim,
2-Hydroxy-5-nonylphenylbenzylketonoxim, und
2-Hydroxy-5-nonylphenylmethylketonoxim
ausgewählt ist, enthält.

6. Verfahren nach irgendeinem der Ansprüche 1 bis 5, worin die Reagens-Zusammensetzung wenigstens ein Hydroxyarylaldoxim, das aus

2-Hydroxy-5-heptylbenzaldoxim,
2-Hydroxy-5-octylbenzaldoxim,
2-Hydroxy-5-nonylbenzaldoxim, und
2-Hydroxy-5-dodecylbenzaldoxim,
ausgewählt ist, enthält.

7. Verfahren nach irgendeinem der Ansprüche 1 bis 6, worin das mit Wasser nicht mischbare Lösungsmittel Kerosin umfaßt.

8. Verfahren nach irgendeinem der Ansprüche 1 bis 7, worin die Kupfer-Werte aus der den Metall-Wert tragenden organischen Phase durch Abstreifen unter Verwendung einer Säure gewonnen werden.

9. Verfahren nach irgendeinem der Ansprüche 1 bis 8, worin die wäßrige Lösung, aus der die Kupfer-Werte gewonnen werden, einen pH von 0,5 bis 7,0 hat.

10. Verwendung von Reagentien, die wenigstens ein Hydroxyarylketoxim der Formel I und/oder II nach Anspruch 1 und wenigstens ein Hydroxyarylaldoxim der Formel III nach Anspruch 1 enthalten, zur Gewinnung von Metall-Werten aus wäßrigen Lösungen.

11. Verfahren zur Formulierung einer Reagens-Zusammensetzung zur Gewinnung von Kupfer-Werten aus wäßrigen Lösungen, umfassend das Vermischen von

(a) einer oder mehreren Hydroxyarylketoxim-Verbindungen nach der Formel I nach Anspruch 1,

(b) einer oder mehreren Hydroxyarylaldoxim-Verbindungen nach der Formel III nach Anspruch 1,

(c) einer Substanz als kinetisches Additiv in einer Menge von 0 bis 20 Mol-%, bezogen auf das vorhandene Hydroxyarylketoxim, und

(d) einer Substanz zur Modifizierung des Extraktions- und Abstreif-Gleichgewichts in einer Menge, die einen Grad der Modifizierung des vorhandenen Hydroxyarylaldoxims von etwa 0,66 auf etwa 1,0 in dem Fall, in dem diese modifizierende Substanz von Nonylphenol verschieden ist, und von etwa 0,898 auf 1,0 in dem Fall, in dem diese modifizierende Substanz Nonylphenol ist, herbeiführt; wobei die Komponenten Hydroxyarylketoxim und Hydroxyarylaldoxim in einem Stoffmengen-Verhältnis von 1:100 100:1 miteinander vermischt werden, wobei der Grad der Modifizierung in Anspruch 1 definiert ist.

**Revendications pour les Etats contractants: BE DE FR GB NL SE**

1. Une composition utile pour extraire le cuivre d'une solution aqueuse et contenant une composition réactive comprenant:

(a) un ou plusieurs composés hydroxyarylcétoximes de formule I

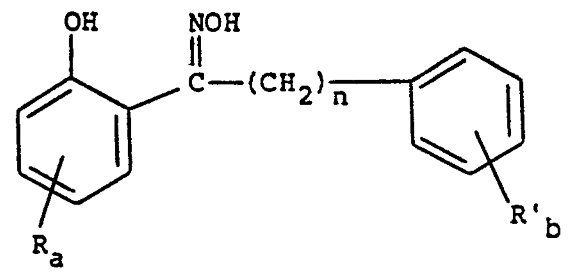

(I)

(dans laquelle R et R', qui peuvent être semblables ou différents, représentent chacun un groupe aliphatique saturé ayant 1 à 25 atomes de carbone, un groupe aliphatique à insaturation éthylénique ayant 3 à 25 atomes de carbone ou un groupe de formule —OR'' où R'' représente un groupe aliphatique saturé ayant 1 à 25 atomes de carbone ou un groupe aliphatique à insaturation éthylénique ayant 3 à 25 atomes de carbone; n est 0 ou 1; et chacun de a et b, qui peuvent être semblables ou différents, et 0, 1, 2, 3 ou 4, la somme de a et b étant d'au moins 1; sous réserve que le nombre total des atomes de carbone dans $R_a$ et $R'_b$ soit de 3 à 25) ou de formule II

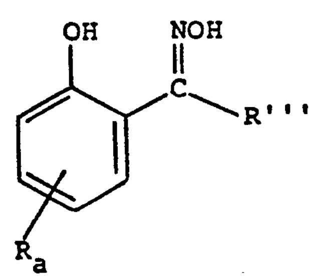

(II)

(dans laquelle R représente un groupe aliphatique saturé ayant 1 à 25 atomes de carbone, un groupe aliphatique à insaturation éthylénique ayant 3 à 25 atomes de carbone ou un groupe de formule —OR'' où

R'' représente un groupe aliphatique saturé ayant 1 à 25 atomes de carbone ou un groupe aliphatique à insaturation éthylénique ayant 3 à 25 atomes de carbone; a est 0, 1, 2, 3 ou 4; et R''' représente un groupe aliphatique saturé ayant 1 à 25 atomes de carbone ou un groupe aliphatique à insaturation éthylénique ayant 3 à 25 atomes de carbone; sous réserve que le nombre total des atomes de carbone dans $R_a$ et R''' soit de 3 à 25);

(b) un ou plusieurs composés hydroxyarylaldoximes de formule III

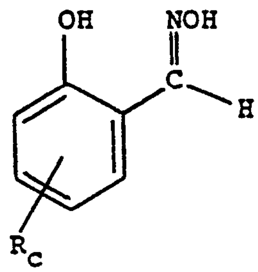

(III)

(dans laquelle R représente un groupe aliphatique saturé ayant 1 à 25 atomes de carbone, un groupe aliphatique à insaturation éthylénique ayant 3 à 25 atomes de carbone ou un groupe de formule —OR'' où R'' représente un groupe aliphatique saturé ayant 1 à 25 atomes de carbone ou un groupe aliphatique à insaturation éthylénique ayant 3 à 25 atomes de carbone; c est 1, 2, 3 ou 4; et le nombre total des atomes de carbone dans $R_c$ est de 3 à 25);

(c) une substance additive cinétique en une quantité de 0 à 20% molaires relativement à l'hydroxyarylcétoxime présente; et

(d) une substance modificatrice de l'équilibre d'extraction et d'épuration en une quantité assurant un degré de modification de l'hydroxyarylaldoxime présente d'environ 0,66 à environ 1,0 lorsque ledit modificateur est autre que le nonylphénol et d'environ 0,898 à 1,0 lorsque ledit modificateur est le nonylphénol;

(e) le rapport molaire de l'hydroxyarylcétoxime présente à l'hydroxyarylaldoxime présente étant de 1/100 à 100/1, où ledit degré de modification désigne le rapport inverse de

(i) le taux du cuivre du solvent épuré de l'hydroxyarylaldoxime en équilibre avec une solution aqueuse d'épuration consistuée de 150 g/l d'acide sulfurique et 30 g/l de $Cu^{2+}$ au

(ii) taux de cuivre du solvant épuré de ladite aldoxime dans les mêmes conditions lorsque l'additif modificateur de l'équilibre est présent et

pour la détermination du degré de modification, la température est d'environ 24°C, la concentration molaire de l'aldoxime ou du mélange des aldoximes dans le diluant est d'environ 0,184 comme déterminé par la charge de cuivre et le titrage, un charge d'aldoxime ayant une pureté d'environ 94%, le reste étant essentiellement le résidu d'alcoylphénol constituant la matière de départ utilisée, le diluant de l'hydroxyarylaldoxime est l'Escaid® 100 ou un mélange d'hydrocarbures aliphatiques et aromatiques ayant une constitution très proche de celle de l'Escaid® 100, une technologie d'absorption atomique étant utilisée pour la détermination de la teneur en cuivre.

2. Une composition selon la revendication 1 contenant une ou plusieurs hydroxyarylcétoximes de formule I, comme défini dans la revendication 1.

3. Une composition selon l'une des revendications 1 et 2 contenant une ou plusieurs hydroxyarylcétoximes de formule II, comme défini dans la revendication 1.

4. Une composition selon l'une quelconque des revendications 1 à 3, dans laquelle les composés répondant aux formules I, II ou III, comme défini dans la revendication 1, satisfont à une ou plusieurs des conditions suivantes:

(a) dans un composé de formule I, a est 1 et b est 0;

(b) dans un composé de formule I, n est 0;

(c) dans un composé de formule I, n est 1;

(d) dans un composé de formule II, a est 1;

(e) dans un composé de formule II, R''' représente un groupe méthyle;

(f) dans un composé de formule III, c est 1;

(g) dans un ou plusieurs des composés de formule I, II et III, R représente un groupe aliphatique saturé ayant 7 à 12 atomes de carbone fixé au groupe phényle en une position en para de l'hydroxyle; et

(h) dans un ou plusieurs des composés de formule I, II et III, les groupes représentés par R comprennent un mélange d'isomères.

5. Une composition selon l'ue quelconque des revendications 1 à 4 comprenant au moins une hydroxyarylcétoxime choisie parmi:

la 2-hydroxy-5-nonylbenzophénone-oxime;

la 2-hydroxy-5-dodécylbenzophénone-oxime;

la 2-hydroxy-5-nonylphénylbenzylcétone-oxime; et

la 2-hydroxy-5-nonylphénylméthylcétone-oxime.

6. Une composition selon l'une quelconque des revendications 1 à 5 comprenant au moins une hydroxyarylaldoxime choisie parmi:

la 2-hydroxy-5-heptylbenzaldoxime;
la 2-hydroxy-5-octylbenzaldoxime;
la 2-hydroxy-5-nonylbenzaldoxime; et
la 2-hydroxy-5-dodécylbenzaldoxime.

7. Une composition selon l'une quelconque des revendications 1 à 6, dans laquelle les composants (a) et (b) sont choisis parmi les suivants:

(i) la 2-hydroxy-5-nonylbenzophénone-oxime et la 2-hydroxy-5-nonylbenzaldoxime;
(ii) la 2-hydroxy-5-nonylbenzophénone-oxime et la 2-hydroxy-5-dodécylbenzaldoxime;
(iii) la 2-hydroxy-5-nonylphenylméthylcétone-oxime et la 2-hydroxy-5-nonylbenzaldoxime; et
(iv) la 2-hydroxy-5-nonylphénylméthylcétone-oxime et la 2-hydroxy-5-dodécylbenzaldoxime.

8. Une composition selon l'une quelconque des revendications 1 à 7, dans laquelle le rapport molaire de l'hydroxyarylcétoxime présente à l'hydroxyarylaldoxime présente est de 1/4 à 4/1.

9. Une composition selon l'une quelconque des revendications 1 à 8 contenant une substance additive cinétique choisie par les α-hydroxyoximes et les α,ß-dioximes.

10. Une composition selon la revendication 9 comprenant comme substance additive cinétique la 5,8-diéthyl-7-hydroxydodécane-6-oxime ou un mélange de 1-(4'-alcoylphényl)-1,2-propanedionedioximes.

11. Une composition selon l'une quelconque des revendications 1 à 10, dans laquelle une substance additive cinétique est présente en une quantité de 0,01 à 15% molaires par rapport à l'hydroxyarylcétoxime présente.

12. Une composition selon l'une quelconque des revendications 1 à 11 contenant une substance modificatrice de l'équilibre d'extraction et d'épuration choisie parmi les alcools aliphatiques en $C_6$ à $C_{20}$; les alcoylphénols en $C_6$ à $C_{20}$; et les composés organophosphorés.

13. Une composition selon la revendication 12, contenant une substance modificatrice de l'équilibre d'extraction et d'épuration choisie parmi: le n-hexanol; le n-octanol; le 2-éthylhexanol; l'isodécanol; le dodécanol; le tridécanol; l'hexadécanol; l'octadécanol; l'héptylphénol; l'octylphénol; le nonylphénol; le docécylphénol; le phosphate de tributyle; et le phosphate de tri(2-éthylhéxyle).

14. Une composition selon l'une quelconque des revendications 1 à 13, dans laquelle une substance modificatrice de l'équilibre d'extraction et d'épuration est présente en une quantité assurant un degré de modification de l'hydroxyarylaldoxime présente d'environ 0,75 à 0,99 lorsque ledit modificateur est autre que le nonylphénol.

15. Un procédé pour l'extraction du cuivre d'une solution aqueuse comprenant:

(1) le contact de la solution aqueuse avec une phase organique comprenant un solvant non miscible à l'eau et une composition réactive comme défini dans la revendication 1 pour extraire au moins une portion du cuivre dans la phase organique;

(2) la séparation de la phase organique riche en cuivre obtenu d'avec la phase aqueuse; et

(3) la récupération du cuivre de la phase organique riche en métal.

16. L'utilisation pour la récupération de métaux dans des solutions aqueuses de réactifs contenant au moins une hydroxyarylcétoxime de formule I et/ou II comme défini dans la revendication 1 et au moins une hydroxyarylaldoxime de formule III comme défini dans la revendication 1.

**Revendications pour l'Etat contractant: AT**

1. Un procédé la récupération du cuivre d'une solution aqueuse comprenant (1) le contact de la solution aqueuse avec une phase organique comprenant un solvant non miscible à l'eau et une composition réactive pour extraire au moins une portion des métaux dans la phase organique; (2) la séparation de la phase organique riche en métaux obtenue d'avec la phase aqueuse; et (3) la récupération du cuivre de la phase organique riche en métal, caractérisé en ce que ladite composition réactive est une composition comprenant:

(a) un ou plusieurs composés hydroxyarylcétoximes de formule I

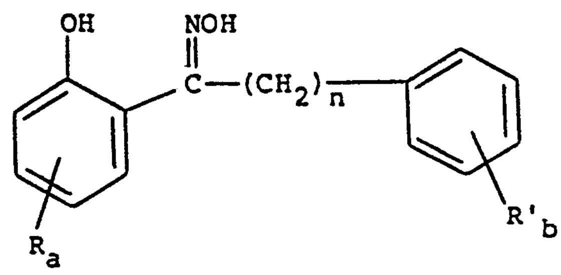

(I)

(dans laquelle R et R', qui peuvent être semblables ou différents, représentent chacun un groupe aliphatique saturé ayant 1 à 25 atomes de carbone, un groupe aliphatique à insaturation éthylénique ayant

3 à 25 atomes de carbone ou un groupe de formule —OR″ où R″ représente un groupe aliphatique saturé ayant 1 à 25 atomes de carbone ou un groupe aliphatique à insaturation éthylénique ayant 3 à 25 atomes de carbone; n est 0 ou 1; et chacun de a et b, qui peuvent être semblables ou différents, est 0, 1, 2, 3 ou 4, la somme de a et b étant d'au moins 1; sous réserve que le nombre total des atomes de carbone dans $R_a$ et $R'_b$ soit de 3 à 25) ou de formule II

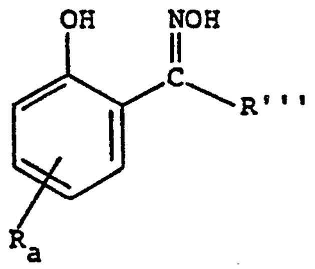

(II)

(dans laquelle R représente un groupe aliphatique saturé ayant 1 à 25 atomes de carbone, un groupe aliphatique à insaturation éthylénique ayant 3 à 25 atomes de carbone ou un groupe de formule —OR″ où R″ représente un groupe aliphatique saturé ayant 1 à 25 atomes de carbone ou un groupe aliphatique à insaturation éthylénique ayant 3 à 25 atomes de carbone; a est 0, 1, 2, 3 ou 4; et R‴ représente un groupe aliphatique saturé ayant 1 à 25 atomes de carbone ou un groupe aliphatique à insaturation éthylénique ayant 3 à 25 atomes de carbone; sous réserve que le nombre total des atomes de carbone dans $R_a$ et R‴ soit de 3 à 25);

(b) un ou plusieurs composés hydroxyarylaldoximes de formule III

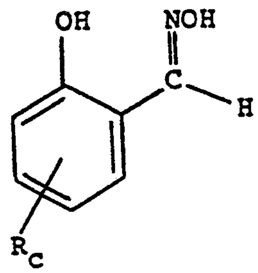

(III)

(dans laquelle R représente un groupe aliphatique saturé ayant 1 à 25 atomes de carbone, un groupe aliphatique à insaturation éthylénique ayant 3 à 25 atomes de carbone ou un groupe de formule —OR″ où R″ représente un groupe aliphatique saturé ayant 1 à 25 atomes de carbone ou un groupe aliphatique à insaturation éthylénique ayant 3 à 25 atomes de carbone; c est 1, 2, 3 ou 4; et le nombre total des atomes de carbone dans $R_c$ est de 3 à 25);

(c) une substance additive cinétique en une quantité de 0 à 20% molaires relativement à l'hydroxyarylcétoxime présente; et

(d) une substance modificatrice de l'équilibre d'extraction et d'épuration en une quantité assurant un degré de modification de l'hydroxyarylaldoxime présente d'environ 0,66 à environ 1,0 lorsque ledit modificateur est autre que le nonylphénol et d'environ 0,898 à 1,0 lorsque ledit modificateur est le nonylphénol;

(e) le rapport molaire de l'hydroxyarylcétoxime présente à l'hydroxyarylaldoxime présente étant de 1/100 à 100/1, où ledit degré de modification désigne le rapport inverse de

(i) le taux du cuivre du solvent épuré de l'hydroxyarylaldoxime en équilibre avec une solution aqueuse d'épuration consistuée de 150 g/l d'acide sulfurique et 30 g/l de $Cu^{2+}$ au

(ii) taux de cuivre du solvant épuré de ladite aldoxime dans les mêmes conditions lorsque l'additif modificateur de l'équilibre est présent et

pour la détermination du degré de modification, la température est d'environ 24°C, la concentration molaire de l'aldoxime ou du mélange des aldoximes dans le diluant est d'environ 0,184 comme déterminé par la charge de cuivre et le titrage, un charge d'aldoxime ayant une pureté d'environ 94%, le reste étant essentiellement le résidu d'alcoylphénol constituant la matière de départ utilisée, le diluant de l'hydroxyarylaldoxime est l'Escaid® 100 ou un mélange d'hydrocarbures aliphatiques et aromatiques ayant une constitution très proche de celle de l'Escaid® 100, une technologie d'absorption atomique étant utilisée pour la détermination de la teneur en cuivre.

2. Une procédé selon la revendication 1 dans lequel ladite composition réactive contient une ou plusieurs hydroxyarylcétoximes de formule I, comme défini dans la revendication 1.

3. Une procédé selon l'une des revendications 1 et 2 dans lequel ladite composition réactive contient une ou plusieurs hydroxyarylcétoximes de formule II, comme défini dans la revendication 1.

4. Une procédé selon l'une quelconque des revendications 1 à 3, dans lequel ladite composition réactive contient des composés de formules III, II et ou I qui répondant à une ou plusieurs des conditions suivantes:

(a) dans un composé de formule I, a est 1 et b est 0;

(b) dans un composé de formule I, n est 0;

(c) dans un composé de formule I, n est 1;

(d) dans un composé de formule II, n est 1;

(e) dans un composé de formule II, R''' représente un groupe méthyle;

(f) dans un composé de formule III, c est 1;

(g) dans un ou plusieurs des composés de formule I, II et III, R représente un groupe aliphatique saturé ayant 7 à 12 atomes de carbone fixé au groupe phényle en une position en para de l'hydroxyle; et

(h) dans un ou plusieurs des composés de formule I, II et III, les groupes représentés par R comprennent un mélange d'isomères.

5. Une procédé selon l'une quelconque des revendications 1 à 4, dans lequel ladite composition réactive contient au moins une hydroxyarylcétoximes choisie parmi:

la 2-hydroxy-5-nonylbenzophénone-oxime;

la 2-hydroxy-5-dodécylbenzophénone-oxime;

la 2-hydroxy-5-nonylphénylbenzylcétone-oxime; et

la 2-hydroxy-5-nonylphénylméthylcétone-oxime.

6. Une procédé selon l'une quelconque des revendications 1 à 5, dans lequel ladite composition réactive contient au moins une hydroxyarylaldoxime choisie parmi:

la 2-hydroxy-5-heptylbenzaldoxime;

la 2-hydroxy-5-octylbenzaldoxime;

la 2-hydroxy-5-nonylbenzaldoxime; et

la 2-hydroxy-5-dodécylbenzaldoxime.

7. Un procédé selon l'une quelconque des revendications 1 à 6, dans lequel ledit solvant organique non miscible à l'eau comprend du kérosène.

8. Une procédé selon l'une quelconque des revendications 1 à 7, dans lequel le cuivre est recupéré de la phase organique riche en métal par épuration à l'aide d'un acide.

9. Un procédé selon l'une quelconque des revendications 1 à 8, dans lequel ladite solution aqueuse dont on récupère le cuivre a un pH de 0,5 à 7,0.

10. L'utilisation pour la récupération des métaux dans des solutions aqueuses de réactifs contenant au moins une hydroxyarylcétoximes de formule I et/ou de formule II, comme défini dans la revendication 1, et au moins une hydroxyarylaldoxime de formule III, comme défini dans la revendication 1.

11. Une procédé pour préparer une composition réactive pour la récupération du cuivre dans des solutions aqueuses, lequel procédé comprend le mélange de

(a) un ou plusieurs composés hydroxyarylcétoximes de formule I, comme défini dans la revendication 1

(b) un ou plusieurs composés hydroxyarylaldoximes de formula III, comme défini dans la revendication 1

(c) une substance additive cinétique en une quantité de 0 à 20% molaires relativement à l'hydroxyarylcétoxime présente; et

(d) une substance modificatrice de l'équilibre d'extraction et d'épuration en une quantité assurant un degré de modification de l'hydroxyarylaldoxime présente d'environ 0,66 à environ 1,0 lorsque ledit modificateur est autre que le nonylphénol et d'environ 0,898 à 1,0 lorsque ledit modificateur est le nonylphénol; les composants hydroxyarylcétoximes et hydroxyarylaldoximes étant mélangés dans un rapport molaire de 1/100 à 100/1, ledit degré de modification étant comme défini dans la revendication 1.